(19) Europäisches Patentamt
European Patent Office
Office européen des brevets

(11) EP 3 722 379 B1

(12) # EUROPEAN PATENT SPECIFICATION

(45) Date of publication and mention of the grant of the patent:
**11.10.2023 Bulletin 2023/41**

(21) Application number: **18855204.6**

(22) Date of filing: **01.06.2018**

(51) International Patent Classification (IPC):
***C09D 11/037*** (2014.01) ***C09D 11/322*** (2014.01)
***C09K 11/06*** (2006.01)

(52) Cooperative Patent Classification (CPC):
**C09D 11/037; C09D 11/322; C09K 11/06;**
C09K 2211/182

(86) International application number:
**PCT/JP2018/021238**

(87) International publication number:
**WO 2019/053962 (21.03.2019 Gazette 2019/12)**

(54) **INK COMPOSITION AND PRINTED MATTER**

TINTENZUSAMMENSETZUNG UND DRUCKSACHE

COMPOSITION D’ENCRE ET IMPRIMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2017 JP 2017178254**

(43) Date of publication of application:
**14.10.2020 Bulletin 2020/42**

(73) Proprietor: **Dai Nippon Printing Co., Ltd.**
**Tokyo 162-8001 (JP)**

(72) Inventors:
- **AOYAMA, Yuko**
  **Tokyo 162-8001 (JP)**
- **SATO, Jun**
  **Tokyo 162-8001 (JP)**
- **MURAKAMI, Fumiyasu**
  **Tokyo 162-8001 (JP)**
- **OKADA, Masato**
  **Tokyo 162-8001 (JP)**
- **YOSHIHARA, Toshio**
  **Tokyo 162-8001 (JP)**

(74) Representative: **Müller-Boré & Partner Patentanwälte PartG mbB**
**Friedenheimer Brücke 21**
**80639 München (DE)**

(56) References cited:
**EP-A1- 2 706 081**
**WO-A1-2009/110199**
**WO-A1-2010/032395**
**WO-A1-2015/002282**
**WO-A1-2015/002282**
**JP-A- 2006 077 191**
**JP-A- 2007 277 281**
**JP-A- 2008 115 225**
**JP-A- 2012 061 794**
**JP-A- 2015 071 751**
**JP-A- 2016 166 140**
**JP-A- 2017 137 415**
**US-A1- 2006 063 036**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 722 379 B1

## Description

### Technical Field

The disclosure relates to an ink composition and a printed product.

### Background Art

Authenticity determination and anti-counterfeit features are needed to be imparted to printed products requiring security, such as banknotes, marketable securities, passports, ID cards, stamps, coupons and various kinds of tickets, in order to prevent counterfeiting and tampering and to identify whether they are counterfeit products or authentic products.

In recent years, with the spread of electronic devices such as printers and scanners, unauthorized copying of marketable securities, etc., is rampant, and the damage of such counterfeiting is a social problem. Since counterfeiting techniques have become increasingly sophisticated, there is a need for rapid development of advanced authenticity determination and anti-counterfeiting techniques.

For example, as an advanced anti-counterfeiting technique, Patent Document 1 discloses a printed product using hologram. However, this technique is high in production cost and unsuitable for use in printed products with low unit costs. Patent Document 2 discloses a product printed with a fluorescent ink which is invisible in a visible light region and emits fluorescence by constant wavelength light other than visible light.

As a fluorescent substance having a sufficient heat resistance to be blended in a plastic material and fabricated, Patent Document 3 discloses a rare-earth complex polymer comprising a plurality of both trivalent rare-earth ions and phosphine oxide multidentate ligands and a linked structure formed by the phosphine oxide multidentate ligands being coordinated to a plurality of the rare-earth ions. Patent Document 4 describes a fluorescent image-printed article and fluorescent ink. Patent Document 5 discloses a ligand, and rare earth complex.

### Citation List

Patent Document 1: Japanese Patent Application Laid-Open (JP-A) No. H06-278396
Patent Document 2: JP-A No. H06-297888
Patent Document 3: International Publication No. WO2012/150712
Patent Document 4: US 2006/063036 A1
Patent Document 5: WO 2015/002282 A1

### Summary of Invention

### Technical Problem

Security marking by fluorescence which is, like Patent Document 2, invisible in a visible light region and emits fluorescence by constant wavelength light other than visible light, is preferred from the viewpoint of giving no damage to the appearance and design of products and items. However, since light-emitting substances, fluorescent inks and so on are relatively easily available in recent years, there is a problem in that security marking is ineffective in preventing counterfeiting. As a method for increasing anti-counterfeiting effects, it is considered to make counterfeiting difficult by controlling the emitted light color of inks to a desired color that is hard to counterfeit. It is also considered to make counterfeiting difficult by adding a design property to a light emission pattern, by the ink in which the emitted light color is controlled to a desired color. However, it is difficult to obtain increased anti-counterfeiting effects with conventional fluorescent inks, since it is difficult for them to control their emitted light color to a desired color, while keeping high light emission intensity.

Also, conventional fluorescent inks may cause a change in emitted light color or a decrease in light emission intensity by long-time exposure to natural light, and they are required to have increased light resistance. Especially, an ink used in a printed product requiring security, needs to have high light emission intensity in practical application. However, an ink containing an organic light-emitting material with high light emission intensity, tends to cause a change in its emitted light color. Accordingly, from the viewpoint of practical application, the ink used in the printed product requiring security, needs to have high light emission intensity and excellent light resistance that can suppress a change in the emitted light color.

The disclosed embodiments is to provide an ink composition configured to form an ink layer achieving a desired emitted light color with excellent light emission intensity and having excellent light resistance, and a printed product

comprising an ink layer achieving a desired emitted light color with excellent light emission intensity and having excellent light resistance.

Solution to Problem

In one embodiment, there is provided an ink composition comprising:

a rare-earth complex containing one kind of trivalent rare-earth ion selected from the group consisting of $Eu^{3+}$, $Tb^{3+}$, $Sm^{3+}$, $Er^{3+}$, $Pr^{3+}$, $Ho^{3+}$, $Tm^{3+}$ and $Dy^{3+}$, and a phosphine oxide ligand represented by the following general formula (1) and coordinated to the rare-earth ion, and
a light-emitting material different from the rare-earth complex,
wherein an absolute value of a difference between a wavelength (λ1) at which a light emission intensity of the rare-earth complex is maximum and a wavelength (λ2) at which a light emission intensity of the light-emitting material is maximum, is 50 nm or more:

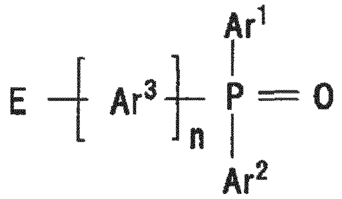

(1)

in the general formula (1), $Ar^1$ and $Ar^2$ are each independently an aromatic group optionally containing a substituent group; $Ar^3$ is a divalent group represented by the following general formula (2a), (2b) or (2c); and n is 1 or 2:

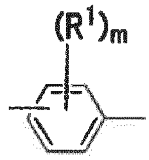

(2a)

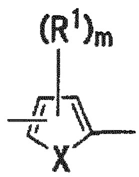

(2b)

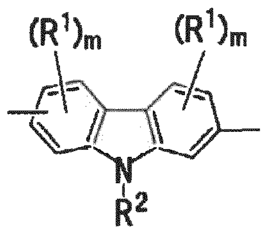

(2c)

in the general formulae (2a) to (2c), $R^1$ is each independently a monovalent substituent group; X is a sulfur atom or an oxygen atom; $R^2$ is a hydrogen atom or a hydrocarbon group; m is an integer of from 0 to a number of substitutable sites of a ring to which $R^1$ is bound; and when there are a plurality of R's, they are optionally the same or different, and
in the general formula (1), E is a phosphine oxide group represented by the following general formula (3):

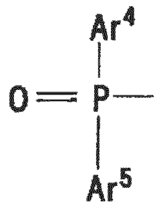

(3)

in the general formula (3), $Ar^4$ and $Ar^5$ are each independently an aromatic group optionally containing a substituent group; $Ar^1$ and $Ar^4$ are optionally bound to each other directly or via a linking group; and $Ar^2$ and $Ar^5$ are optionally bound to each other directly or via a linking group.

Furthermore, the phosphine oxide ligand is a bidentate ligand, and the rare-earth complex is a rare-earth complex polymer and contains a linked structure formed by coordinating the phosphine oxide ligand to two of the rare-earth ions.

The rare-earth complex further contains a ligand represented by the following general formula (4-1) and a ligand represented by the following general formula (4-2):

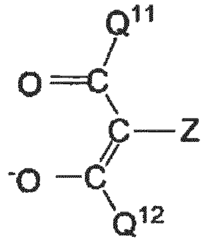

(4-1)

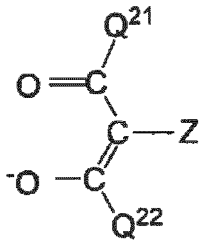

(4-2)

in the general formulae (4-1) and (4-2), $Q^{11}$ and $Q^{12}$ are each independently an aliphatic hydrocarbon group optionally containing a substituent group; $Q^{21}$ is an aliphatic hydrocarbon group optionally containing a substituent group; $Q^{22}$ is an aromatic hydrocarbon group optionally containing a substituent group or an aromatic heterocyclic group optionally containing a substituent group; and Z is a hydrogen atom or a deuterium atom.

In one embodiment, there is provided the ink composition, wherein an emitted light color is white.

In another embodiment, there is provided the ink composition, wherein the content ratio of the ligand represented by the general formula (4-2) is 10 mol or more and 99 mol or less with respect to the total content (100 mol) of the ligand represented by the general formula (4-1) and the ligand represented by the general formula (4-2).

In another embodiment, there is provided a printed product comprising an ink layer containing a solidified product of the ink composition in one embodiment in the present disclosure.

Advantageous Effects of Invention

According to the disclosed embodiments, an ink composition configured to form an ink layer achieving a desired emitted light color with excellent light emission intensity and having excellent light resistance, is provided. Also according to the disclosed embodiments, a printed product comprising an ink layer achieving a desired emitted light color with excellent light emission intensity and having excellent light resistance, is provided.

Brief Description of Drawings

In the accompanying drawings,

FIG. 1 is a schematic sectional view of an example of the printed product of the disclosed embodiments;
FIG. 2 is a view showing the light emission spectrum of the white light-emitting ink layer of the printed product of Reference Example 1;
FIG. 3 is a view showing the light emission spectrum of the white light-emitting ink layer of the printed product of Reference Example 2;
FIG. 4 is a view showing the light emission spectrum of the white light-emitting ink layer of the printed product of Example 7;
FIG. 5 is a view showing the light emission spectrum of the white light-emitting ink layer of the printed product of Example 8;
FIG. 6 is a view showing the light emission spectrum of the white light-emitting ink layer of the printed product of Comparative Example 1;
FIG. 7 is a view showing the light emission spectrum of the white light-emitting ink layer of the printed product of Comparative Example 2;
FIG. 8 is a view showing the light emission spectrum of the yellow light-emitting ink layer of the printed product of Reference Example 3;
FIG. 9 is a view showing the light emission spectrum of the yellow light-emitting ink layer of the printed product of Reference Example 4;
FIG. 10 is a view showing the light emission spectrum of the yellow light-emitting ink layer of the printed product of Example 9;
FIG. 11 is a view showing the light emission spectrum of the yellow light-emitting ink layer of the printed product of Example 10;
FIG. 12 is a view showing the light emission spectrum of the yellow light-emitting ink layer of the printed product of Comparative Example 3;
FIG. 13 is a view showing the light emission spectrum of the yellow light-emitting ink layer of the printed product of Comparative Example 4;
FIG. 14 is a view showing the light emission spectrum of the violet light-emitting ink layer of the printed product of Reference Example 5;
FIG. 15 is a view showing the light emission spectrum of the violet light-emitting ink layer of the printed product of Reference Example 6;
FIG. 16 is a view showing the light emission spectrum of the violet light-emitting ink layer of the printed product of Example 11;
FIG. 17 is a view showing the light emission spectrum of the violet light-emitting ink layer of the printed product of Example 12;
FIG. 18 is a view showing the light emission spectrum of the violet light-emitting ink layer of the printed product of Comparative Example 5;
FIG. 19 is a view showing the light emission spectrum of the violet light-emitting ink layer of the printed product of Comparative Example 6;
FIG. 20 is a view showing the light emission spectrum of a standard sample;
FIG. 21 is a view showing the light emission spectrum of the single color light-emitting ink layer of a red rare-earth complex 1 (not according to the invention);
FIG. 22 is a view showing the light emission spectrum of the single color light-emitting ink layer of a red rare-earth complex 2 (not according to the invention);
FIG. 23 is a view showing the light emission spectrum of the single color light-emitting ink layer of a red rare-earth complex 3;
FIG. 24 is a view showing the light emission spectrum of the single color light-emitting ink layer of a red rare-earth complex 4;
FIG. 25 is a view showing the light emission spectrum of the single color light-emitting ink layer of a comparative red rare-earth complex 1;
FIG. 26 is a view showing the light emission spectrum of the single color light-emitting ink layer of a comparative red light-emitting inorganic oxide;
FIG. 27 is a view showing the excitation spectrum of the single color light-emitting ink layer of the red rare-earth complex 1 (not according to the invention);
FIG. 28 is a view showing the excitation spectrum of the single color light-emitting ink layer of the red rare-earth complex 2 (not according to the invention);
FIG. 29 is a view showing the excitation spectrum of the single color light-emitting ink layer of the red rare-earth complex 3;
FIG. 30 is a view showing the excitation spectrum of the single color light-emitting ink layer of the red rare-earth complex 4;

FIG. 31 is a view showing the excitation spectrum of the single color light-emitting ink layer of the comparative red rare-earth complex 1; and

FIG. 32 is a view showing the excitation spectrum of the single color light-emitting ink layer of the comparative red light-emitting inorganic oxide.

Description of Embodiments

The embodiments of the present disclosure are explained below while referring to the drawings and the like. However, the present disclosure can be implemented in many different aspects and is not to be interpreted as being limited to the description of the embodiments exemplified herein. In addition, in order to make the explanation clearer, although the drawings may be schematically represented in terms of the width, thickness, shape and the like of each part as compared with their actual form, they are only an example, and the interpretation of the present disclosure is not limited. In addition, in the present specification and each figure, the same reference numerals are given to the same elements as those described previously with reference to the previous figures, and a detailed explanation may be omitted as appropriate. In addition, for the purposes of explanation, although an explanation is given using the terms "upward" or "downward", the upward and downward directions may also be reversed.

In the present specification, when a certain member or region is referred to as being "above (or below)" another member or region, unless there is a specific limitation, this means not only that a part or region is directly above (or directly below) a certain part or region, but also includes the case where it is located above (or below) another member or region, that is, another component is included between another member or region.

1. Ink composition

The ink composition of the disclosed embodiments is an ink composition comprising:

a rare-earth complex containing one kind of trivalent rare-earth ion selected from the group consisting of $Eu^{3+}$, $Tb^{3+}$, $Sm^{3+}$, $Er^{3+}$, $Pr^{3+}$, $Ho^{3+}$, $Tm^{3+}$ and $Dy^{3+}$, and a phosphine oxide ligand represented by the following general formula (1) and coordinated to the rare-earth ion, and

a light-emitting material different from the rare-earth complex,

wherein an absolute value of a difference between a wavelength ($\lambda 1$) at which a light emission intensity of the rare-earth complex is maximum and a wavelength ($\lambda 2$) at which a light emission intensity of the light-emitting material is maximum, is 50 nm or more:

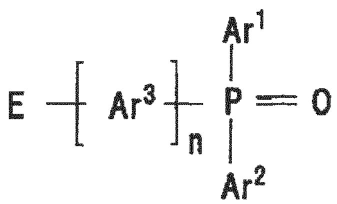
(1)

in the general formula (1), $Ar^1$ and $Ar^2$ are each independently an aromatic group optionally containing a substituent group; $Ar^3$ is a divalent group represented by the following general formula (2a), (2b) or (2c); and n is 1 or 2: [0023]

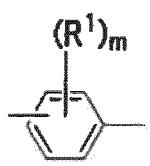
(2a)

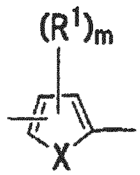
(2b)

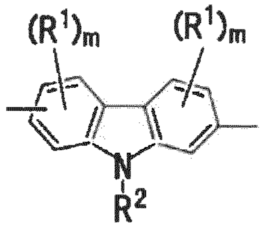

(2c)

in the general formulae (2a) to (2c), $R^1$ is each independently a monovalent substituent group; X is a sulfur atom or an oxygen atom; $R^2$ is a hydrogen atom or a hydrocarbon group; m is an integer of from 0 to a number of substitutable sites of a ring to which $R^1$ is bound; and when there are a plurality of $R^1$s, they are optionally the same or different, and

in the general formula (1), E is a phosphine oxide group represented by the following general formula (3):

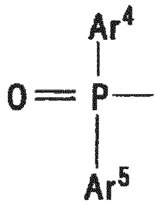

(3)

in the general formula (3), $Ar^4$ and $Ar^5$ are each independently an aromatic group optionally containing a substituent group; $Ar^1$ and $Ar^4$ are optionally bound to each other directly or via a linking group; and $Ar^2$ and $Ar^5$ are optionally bound to each other directly or via a linking group.

For conventional ink compositions, when different kinds of light-emitting materials in different colors are mixed therein, due to the presence of a light-emitting material with insufficient light emission intensity, it is difficult to achieve a desired emitted light color when it is tried to increase the light emission intensity of the emitted light color after the mixing. Meanwhile, when it is tried to obtain a desired emitted light color, the light emission intensity of the emitted light color after the mixing is decreased, and it is difficult to obtain a desired emitted light color with high light emission intensity. Also, conventional ink compositions may cause a change in emitted light color or a decrease in light emission intensity, when they are exposed to natural light for a long time. That is, their light resistance is insufficient.

The ink composition of the disclosed embodiments contains the above-specified rare-earth complex and the light-emitting material different from the rare-earth complex. Accordingly, the ink composition of the disclosed embodiments can form an ink layer achieving a desired emitted light color with excellent light emission intensity and having excellent light resistance.

The above-specified rare-earth complex contained in the ink composition of the disclosed embodiments, has a structure in which a phosphine oxide is coordinated to a rare-earth metal. Accordingly, excellent light emission intensity is obtained. By appropriately selecting the rare-earth metal, a red, green or blue emitted light color is achieved. Since the phosphine oxide contains a low-vibration P=O framework, once it is coordinated to the rare-earth metal, it is thought to function to prevent the vibrational deactivation of the energy received by the rare-earth metal, increase the light emission efficiency and increase the light emission intensity. Since the above-specified rare-earth complex can achieve a red, green or blue emitted light color with excellent light emission intensity, by containing the above-specified rare-earth complex in combination with a light-emitting material emitting different color from the rare-earth complex, the ink composition of the disclosed embodiments can emit fluorescence in any of three primary colors of light and can achieve a desired emitted light color with excellent light emission intensity. The ink composition of the disclosed embodiments can control the emitted light color to a desired color with excellent light emission intensity. Accordingly, by the use of the ink composition of the disclosed embodiments, an emitted light color with high anti-counterfeit property can be achieved; design property can be imparted to a light emission pattern; and a printed product with high anti-counterfeit property and good design can be produced.

Since the above-specified rare-earth complex of the ink composition of the disclosed embodiments, contains the phosphine oxide which is a chemically stable pentavalent phosphorus compound as the ligand, it has excellent light resistance. Accordingly, an ink layer with excellent light resistance can be produced by the use of the ink composition of the disclosed embodiments. Especially, a complex polymer obtained with a bidentate phosphine oxide ligand, is obtained in the form of solid particles that are insoluble in organic solvents, by a strong intermolecular interaction. Accordingly, the dispersion state of the complex polymer in the ink composition is different from that of a normal complex

which is soluble in organic solvents, and better light resistance is presumed to be obtained. More specifically, since a normal complex is dissolved in the components of the ink composition and present in the state of molecules, it is susceptible to light, and light deterioration of the complex molecules proceeds quickly. Meanwhile, the complex polymer obtained with the bidentate phosphine oxide ligand is not dissolved in the components of the ink composition and is dispersed in the form of solid particles. Accordingly, in a printed product thus produced, light deterioration is expected to occur only on the particle surface, and the development of light deterioration is presumed to be reduced.

By increasing the light resistance of the printed product, the ink layer becomes an ink layer resistant to practical application, and it is applicable to a wide range of applications such as bills, checks, stock certificates, debenture stocks, marketable securities (e.g., various kinds of securities), banknotes, gift certificates, transportation tickets, admission tickets for paid facilities and events, lottery tickets, winning betting tickets for public sports, stamps, cards (e.g., credit cards), passports, ID cards, various kinds of commercial printed products and posters.

The word "light" in the term "light resistance" encompasses sun light and room lighting such as LED lamps and fluorescent lamps.

As the excitation light of the above-specified rare-earth complex and light-emitting material contained in the ink composition, examples include electromagnetic waves other than visible light, such as ultraviolet light and infrared light.

The ink composition of the disclosed embodiment contains at least the rare-earth complex and the light-emitting material different from the rare-earth complex. As needed, the ink composition may further contain other components, as long as the effects of the disclosed embodiments are not impaired.

<Rare-earth complex>

The rare-earth complex contained in the ink composition of the disclosed embodiments, contains one kind of trivalent rare-earth ion selected from the group consisting of $Eu^{3+}$, $Tb^{3+}$, $Sm^{3+}$, $Er^{3+}$, $Pr^{3+}$, $Ho^{3+}$, $Tm^{3+}$ and $Dy^{3+}$, and a phosphine oxide ligand represented by the general formula (1) and coordinated to the rare-earth ion.

The trivalent rare-earth ion is appropriately selected in order to obtain a desired emitted light color. In particular, from the viewpoint of excellent light emission efficiency and high light emission intensity, the trivalent rare-earth ion is preferably $Eu^{3+}$ or $Tb^{3+}$, and more preferably $Eu^{3+}$. Especially, light-emitting materials showing a red emitted light color have insufficient light emission intensity in many cases, and it has been difficult to achieve a desired color. However, when the trivalent rare-earth ion is $Eu^{3+}$, a red emitted light color with excellent light emission intensity and high color purity is obtained, and a desired emitted light color is easily achieved.

In the general formula (1), $Ar^1$ and $Ar^2$ are each independently an aromatic group optionally containing a substituent group. The aromatic group may be a monovalent aromatic group. The monovalent aromatic group is a group composed of an aromatic ring having one bond to a phosphorus atom, and the aromatic ring may contain a heteroatom or may further contain a substituent group at a site other than the binding site to the phosphorus atom. As the aromatic ring, examples include an aromatic hydrocarbon ring and an aromatic heterocycle, such as an aromatic hydrocarbon group containing 6 to 22 carbon atoms, and an aromatic heterocyclic group containing 2 to 10 carbon atoms forming the ring. As the aromatic ring, examples include, but are not limited to, a benzene ring, a naphthalene ring, a biphenyl ring, a phenanthrene ring, a dibenzo[c,g]phenanthrene ring, a thiophene ring and a pyridine ring. As the substituent group, examples include, but are not limited to, a hydrocarbon group containing 1 to 20 carbon atoms, a hydroxyl group, a nitro group, an amino group, a sulfonyl group, a cyano group, a silyl group, a phosphonic acid group, a diazo group, a mercapto group and a phosphine oxide group. When the aromatic ring constituting $Ar^1$ and $Ar^2$ contains a phosphine oxide group as the substituent group, this site may be coordinated to the rare-earth ion.

A preferred example of $Ar^1$ and $Ar^2$ is a group represented by the following general formula (5):

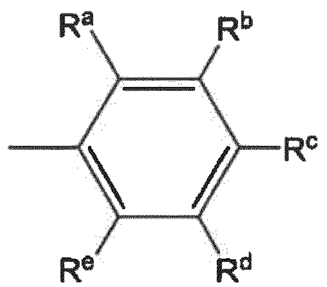

(5)

in the general formula (5), $R^a$, $R^b$, $R^c$, $R^d$ and $R^e$ are each independently a hydrogen atom, a hydrocarbon group containing 1 to 20 carbon atoms, a hydroxyl group, a nitro group, an amino group, a sulfonyl group, a cyano group, a silyl group, a phosphonic acid group, a diazo group or a mercapto group.

In the general formula (1), $Ar^3$ is a divalent group represented by the general formula (2a), (2b) or (2c). From

the viewpoint of light emission intensity and light resistance, $Ar^3$ is preferably a divalent group represented by the general formula (2a) .

In the general formulae (2a), (2b) and (2c), $R^1$ is a monovalent substituent group such as a hydrocarbon group containing 1 to 20 carbon atoms, a hydroxyl group, a nitro group, an amino group, a sulfonyl group, a cyano group, a silyl group, a phosphonic acid group, a diazo group and a mercapto group.

In the general formula (2b), X is a sulfur atom or an oxygen atom.

In the general formula (2c), $R^2$ is a hydrogen atom or a hydrocarbon group. The hydrocarbon group may be any one of an aliphatic hydrocarbon group and an aromatic hydrocarbon group. The hydrocarbon group is preferably an aromatic hydrocarbon group, and more preferably a phenyl group.

In the general formulae (2a), (2b) and (2c), m is an integer of from 0 to the number of substitutable sites of a ring to which $R^1$ is bound, and m is preferably an integer of from 0 to 2, and more preferably 0.

In the general formula (1), n is 1 or 2. When $Ar^3$ is the divalent group represented by the general formula (2c), n is preferably 1.

In the general formula (1), E is a phosphine oxide group represented by the general formula (3). In the general formula (1) where E is the phosphine oxide group represented by the general formula (3), the phosphine oxide ligand represented by the general formula (1) becomes a bidentate ligand, and the rare-earth complex that contains a linked structure formed by coordinating the phosphine oxide ligand to two of the rare-earth ions, can be formed. This rare-earth complex is preferred because it has excellent light resistance and solvent resistance.

In the general formula (3), $Ar^4$ and $Ar^5$ are each independently an aromatic group optionally containing a substituent group. As the aromatic group, examples include those mentioned above as $Ar^1$ and $Ar^2$ in the general formula (1). As with $Ar^1$ and $Ar^2$, when the aromatic ring constituting $Ar^4$ and $Ar^5$ contains a phosphine oxide group as the substituent group, this site may be coordinated to the rare-earth ion. Also, $Ar^1$ and $Ar^4$, as with $Ar^2$ and $Ar^5$, may be bound to each other directly or via a linking group composed of a divalent organic group such as an alkylene group, an arylene group and a carbonyl group.

From the viewpoint of obtaining a stable complex structure, the rare-earth complex further contains a different ligand coordinated to the rare-earth ion. The different ligand is a multidentate ligand. The different ligand is more preferably a β-diketone ligand since, due to its high extinction coefficient, the energy of the excitation light can be efficiently supplied to the coordinated rare-earth ion, and the light emission intensity is increased. The different ligand is even more preferably a ligand composed of acetylacetonate or a derivative thereof. In general, as the different ligand, for example, a ligand represented by the following general formula (4) may be used. According to the claimed invention, the rare-earth complex further contains a ligand represented by the following general formula (4-1) and a ligand represented by the following general formula (4-2):

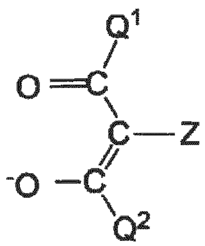

(4)

in the general formula (4), $Q^1$ and $Q^2$ are each independently a hydrocarbon group optionally containing a substituent group or an aromatic heterocyclic group optionally containing a substituent group, and Z is a hydrogen atom or a deuterium atom.

From the viewpoint of light emission intensity, $Q^1$ and $Q^2$ in the general formula (4) preferably contains a hydrocarbon group optionally containing a substituent group.

As the hydrocarbon group as $Q^1$ and $Q^2$ in the general formula (4), examples include an aromatic hydrocarbon group, an aliphatic hydrocarbon group and a combination thereof. As the aliphatic hydrocarbon group, examples include a saturated or unsaturated, straight, branched or cyclic aliphatic hydrocarbon group.

As the aromatic hydrocarbon group, examples include, but are not limited to, an aromatic hydrocarbon group containing 6 to 22 carbon atoms, and further an aromatic hydrocarbon group containing 6 to 14 carbon atoms, such as a phenyl group, a naphthyl group, a biphenyl group, a phenanthryl group and a dibenzo[c,g]phenanthryl group.

When the aliphatic hydrocarbon group is a saturated linear, branched or cyclic aliphatic hydrocarbon group, examples include a saturated linear, branched or cyclic aliphatic hydrocarbon group containing 1 to 20 carbon atoms, and further a saturated linear, branched or cyclic aliphatic hydrocarbon group containing 1 to 10 carbon atoms. As the saturated linear, branched or cyclic aliphatic hydrocarbon groups, examples include, but are not limited to, alkyl and cycloalkyl groups such as a methyl group, an ethyl group, a propyl group, a butyl group, a pentyl group, a hexyl group,

an octyl group, an isopropyl group, a tert-butyl group, a 2-ethylhexyl group, a cyclopentyl group, a cyclohexyl group and a cyclooctyl group.

When the aliphatic hydrocarbon group is an unsaturated linear, branched or cyclic aliphatic hydrocarbon group, examples include an unsaturated linear, branched or cyclic aliphatic hydrocarbon group containing 2 to 20 carbon atoms, and further an unsaturated linear, branched or cyclic aliphatic hydrocarbon group containing 2 to 10 carbon atoms. As the unsaturated linear, branched or cyclic aliphatic hydrocarbon groups, examples include, but are not limited to, alkenyl, cycloalkenyl and alkynyl groups such as a vinyl group, an allyl group, a butenyl group, a pentenyl group, a hexenyl group, an octenyl group, a decenyl group, an isopropenyl group, an isobutenyl group, an isopentenyl group, a 2-ethylhexenyl group, a cyclopentenyl group, a cyclohexenyl group, an ethynyl group, a propynyl group and a butynyl group.

As the combination of the aromatic and aliphatic hydrocarbon groups, examples include, but are not limited to, aralkyl groups such as a benzyl group, a phenethyl group, a naphthylmethyl group and a biphenylmethyl group.

From the viewpoint of light emission intensity, the hydrocarbon group preferably contains the aliphatic hydrocarbon group, and more preferably contains a linear, branched or cyclic alkyl group.

When the aliphatic hydrocarbon group is an alkenyl group, a rare-earth metal complex can be obtained by polymerizing the alkenyl group into a polymer.

From the viewpoint of light emission intensity, the aliphatic hydrocarbon group preferably contains 10 carbon atoms or less, and more preferably 6 carbon atoms or less.

As the aromatic heterocyclic group as $Q^1$ and $Q^2$ in the general formula (4), examples include, but are not limited to, an aromatic heterocyclic group containing 2 to 20 carbon atoms forming a ring, further an aromatic heterocyclic group containing 2 to 10 carbon atoms forming a ring, and further a 4-to 7-membered, aromatic heterocyclic group. As the aromatic heterocyclic groups, examples include, but are not limited to, an imidazolyl group, a pyrazolyl group, an oxazolyl group, a pyridyl group, a pyrimidyl group, a quinolyl group, a furyl group and a thienyl group.

From the viewpoint of obtaining high sensitivity to wavelengths (e.g., 350 nm to 400 nm) of UV lamps and LED light sources used for excitation light irradiation, $Q^1$ and $Q^2$ in the general formula (4) preferably contain at least one selected from the group consisting of an aromatic hydrocarbon group optionally having a substituent group and an aromatic heterocyclic group optionally containing a substitution group. Since the concentration of the rare-earth complex contained in the ink layer of the printed product tends to be low, from the viewpoint of practical use, the sensitivity to excitation light is preferably high.

As needed, the hydrocarbon group and the aromatic heterocyclic group may contain a substituent group such as a deuterium atom, a halogen atom (F, Cl, Br and I), a hydroxyl group, a nitro group, an amino group, a sulfonyl group, a cyano group, a silyl group, a phosphonic acid group, a diazo group and a mercapto group. Also, the hydrocarbon group and the aromatic heterocyclic group may contain a substituent group such as an alkoxy group containing 1 to 10 carbon atoms, an alkoxycarbonyl group containing 1 to 10 carbon atoms, an alkylcarbonyl group containing 1 to 10 carbon atoms, and an alkylcarbonyloxy group containing 1 to 10 carbon atoms.

Also, the aromatic hydrocarbon group and the aromatic heterocyclic group may be substituted with an alkyl group containing 1 to 10 carbon atoms, an alkyl halide group containing 1 to 10 carbon atoms.

As the hydrocarbon group and the aromatic heterocyclic group as $Q^1$ and $Q^2$ in the general formula (4), in particular, when a halogen atom is contained as a substituent group and a C-X bond (where X is a halogen atom; F, Cl, Br or I) is contained, a low-vibration framework is obtained. Accordingly, it is preferable to contain the structure from the point of view that it functions to prevent the vibrational deactivation of the energy received by the rare-earth metal, increase light emission efficiency and increase light emission intensity. It is also preferable from the viewpoint of obtaining excellent crystallinity.

$Q^1$ and $Q^2$ are each independently preferably one or more selected from the group consisting of an aliphatic hydrocarbon group containing 1 to 20 carbon atoms, a perhalogenated aliphatic hydrocarbon group containing 1 to 20 carbon atoms, an aromatic hydrocarbon group containing 6 to 22 carbon atoms, a perhalogenated aromatic hydrocarbon group containing 6 to 22 carbon atoms, an aromatic heterocyclic group containing 2 to 10 carbon atoms forming a ring, and a perhalogenated aromatic heterocyclic group containing 2 to 10 carbon atoms forming a ring, and more preferably one or more selected from the group consisting of an aliphatic hydrocarbon group containing 3 to 6 carbon atoms, a perhalogenated aliphatic hydrocarbon group containing 1 to 20 carbon atoms, an aromatic hydrocarbon group containing 6 to 22 carbon atoms, and an aromatic heterocyclic group containing 2 to 10 carbon atoms forming a ring.

Z in the general formula (4) may be a hydrogen atom H or a deuterium atom D. Z is preferably a hydrogen atom H. A deuterium substitution reaction is caused by the action of a deuterating agent on the rare-earth complex of the general formula (1) where Z is H, thereby obtaining a deuterated complex of the rare-earth complex of the general formula (1) (a complex in which Z is a deuterium atom D).

The deuterating agent contains, for example, a deuterium-containing protic compound, more specifically, deuterated water; deuterated alcohol such as deuterated methanol and deuterated ethanol; deuterated chloride; and deuterated alkali. To promote the deuterium substitution reaction, a base agent such as trimethylamine and triethylamine and additives may be added.

As the β-diketone ligand, examples include, but are not limited to, a ligand derived from β-diketone such as hexafluoroacetylacetone, dibenzoylmethane, 2,2,6,6-tetramethyl-3,5-heptanedione, 4,4,4-trifluoro-1-(2-thienyl)-1,3-butanedione, 4,4,4-trifluoro-1-(2-furanyl)-1,3-butanedione, 4,4,4-trifluoro-1-(3-pyridyl)-1,3-butanedione, 4,4,4-trifluoro-1-phenyl-1,3-butanedione, 4,4,4-trifluoro-1-{5-(2-methylthienyl)}-1,3-butanedione, 4,4,4-trifluoro-1-(2-naphthyl)-1,3-butanedione, and 2,2-dimethyl-6,6,7,7,8,8,8-heptafluoro-3,5-octanedione.

The rare-earth complex preferably forms a coordination structure having a coordination number of 7 or more, by combination of two phosphine oxide ligands each coordinated to one rare-earth ion at one site and two or more ligands represented by the general formula (4) each coordinated to the rare-earth ion at two sites.

From the viewpoint of good balance between required properties such as light emission intensity, sensitivity to excitation light and light resistance, the rare-earth complex contains two or more ligands represented by the general formula (4) and having different structures, specifically a ligand represented by the following general formula (4-1) and a ligand represented by the following general formula (4-2).

In general, as the two or more ligands represented by the general formula (4) and having different structures, examples include the case where, as at least one kind, a ligand containing an aliphatic hydrocarbon group optionally containing a substituent group is contained in any one of $Q^1$ and $Q^2$, and as at least one kind different from the ligand, a ligand containing an aromatic hydrocarbon group optionally containing a substituent group or an aromatic heterocyclic group optionally containing a substituent group, is contained in any one of $Q^1$ and $Q^2$.

From the viewpoint of balance between light emission intensity, sensitivity to excitation light and light resistance, the rare-earth complex contains a ligand represented by the following general formula (4-1) and a ligand represented by the following general formula (4-2), as the two or more ligands represented by the general formula (4) and having different structures.

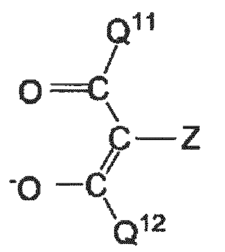

(4-1)

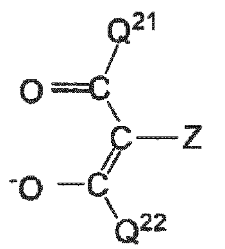

(4-2)

in the general formulae (4-1) and (4-2), $Q^{11}$ and $Q^{12}$ are each independently an aliphatic hydrocarbon group optionally containing a substituent group; $Q^{21}$ is an aliphatic hydrocarbon group optionally containing a substituent group; $Q^{22}$ is an aromatic hydrocarbon group optionally containing a substituent group or an aromatic heterocyclic group optionally containing a substituent group; and Z is a hydrogen atom or a deuterium atom.

The aliphatic hydrocarbon group optionally containing a substituent group and the aromatic hydrocarbon group optionally containing a substituent group or the aromatic heterocyclic group optionally containing a substituent group as $Q^{11}$, $Q^{12}$, $Q^{21}$ and $Q^{22}$ in the general formulae (4-1) and (4-2) may be the same as the aliphatic hydrocarbon group optionally containing a substituent group and the aromatic hydrocarbon group optionally containing a substituent group or the aromatic heterocyclic group optionally containing a substituent group as $Q^1$ and $Q^2$ in the general formula (4). Also, Z in the general formulae (4-1) and (4-2) may be the same as Z in the general formula (4).

The aliphatic hydrocarbon group optionally containing a substituent group as $Q^{11}$, $Q^{12}$ and $Q^{21}$ in the general formulae (4-1) and (4-2) is preferably one or more selected from the group consisting of an aliphatic hydrocarbon group containing 1 to 20 carbon atoms and a perhalogenated aliphatic hydrocarbon group containing 1 to 20 carbon atoms, more preferably one or more selected from the group consisting of an aliphatic hydrocarbon group containing 3 to 6 carbon atoms and a perhalogenated aliphatic hydrocarbon group containing 1 to 10 carbon atoms, even more preferably one or more selected from the group consisting of a perhalogenated aliphatic hydrocarbon group containing 1 to 6 carbon atoms, still more preferably one or more selected from the group consisting of a perfluoro aliphatic hydrocarbon group containing 1 to 3 carbon atoms, and particularly preferably a trifluoromethyl group.

When the aliphatic hydrocarbon group optionally containing a substituent group is contained, a low-vibration framework is obtained. Accordingly, it is preferable to contain the structure from the point of view that it functions to prevent the vibrational deactivation of the energy received by the rare-earth metal and increase the light emission efficiency and the light emission intensity, and from the viewpoint of light resistance.

The aromatic hydrocarbon group optionally containing a substituent group or the aromatic heterocyclic group optionally containing a substituent group as $Q^{22}$ in the general formula (4-2) is preferably one or more selected from the group consisting of an aromatic hydrocarbon group containing 6 to 22 carbon atoms, a perhalogenated aromatic hydrocarbon group containing 6 to 22 carbon atoms, an aromatic heterocyclic group containing 2 to 10 carbon atoms forming a ring, and a perhalogenated aromatic heterocyclic group containing 2 to 10 carbon atoms forming a ring, more preferably one or more selected from the group consisting of an aromatic hydrocarbon group containing 6 to 22 carbon atoms and an aromatic heterocyclic group containing 2 to 10 carbon atoms forming a ring, and even more preferably an aromatic hydrocarbon group containing 6 to 22 carbon atoms.

When the aromatic hydrocarbon group optionally containing a substituent group or the aromatic heterocyclic group optionally containing a substituent group is contained, the sensitivity to wavelengths (e.g., 350 nm to 400 nm) of UV lamps and LED light sources used for excitation light, is increased. The rare-earth complex preferably controls the ligand to have the maximum value in a range of from 350 nm to 400 nm of the excitation spectrum obtained by determining the maximum light emission wavelength of the light emission spectrum as the detection wavelength and measuring the light emission intensity by scanning the wavelength of excitation light.

When the ligand represented by the general formula (4-1) and the ligand represented by the general formula (4-2) are contained, the content ratio may be appropriately determined depending on the ligands used and desired physical properties, and it is not particularly limited. For example, from the viewpoint of balance between light emission intensity, sensitivity to excitation light and light resistance, with respect to the total content (100 mol) of the ligand represented by the general formula (4-1) and the ligand represented by the general formula (4-2), the content ratio of the ligand represented by the general formula (4-2) is preferably 10 mol or more and 99 mol or less, and more preferably 40 mol or more and 95 mol or less.

In general, the rare-earth complex may be a mononuclear rare-earth complex or a rare-earth complex polymer (a dinuclear rare-earth complex). According to the claimed invention, from the viewpoint of light emission intensity, the rare-earth complex is a rare-earth complex polymer.

As the rare-earth complex polymer according to the claimed invention, the phosphine oxide ligand represented by the general formula (1) and coordinated to the rare-earth ions is a bidentate ligand, and which contains the linked structure formed by coordinating the phosphine oxide ligand to two of the rare-earth ions. The rare-earth complex polymer containing the bidentate phosphine oxide ligand is preferred from the viewpoint of excellent light resistance and excellent solvent resistance.

Since conventional rare-earth complexes with high light emission intensity are soluble in solvents, they have problems in that poor solvent resistance is obtained when they are formed into an ink composition or printed product, and they are not suitable for the purpose of security of medical management labels, etc., which are used in scenes such as a medical setting where alcohols and organic solvents are used. In addition, they have the following problem: since security printed products are required to prevent counterfeiting using solvents, conventional rare-earth complexes are unsuitable from the viewpoint of prevention of counterfeiting. Meanwhile, since the rare-earth complex polymer containing the bidentate phosphine oxide ligand is insoluble in alcohols such as methanol and ethanol and organic solvents such as acetone, ethyl acetate, hexane and dichloromethane, the ink composition that contains the rare-earth complex polymer containing the bidentate phosphine oxide ligand, obtains high solvent resistance when it is formed into a printed product; it is usable for the purpose of security in scenes where organic solvents are used; and it prevents counterfeiting using solvents.

Examples of the rare-earth complex polymer described herein in general include a rare-earth complex containing a repeating unit represented by the following general formula (6):

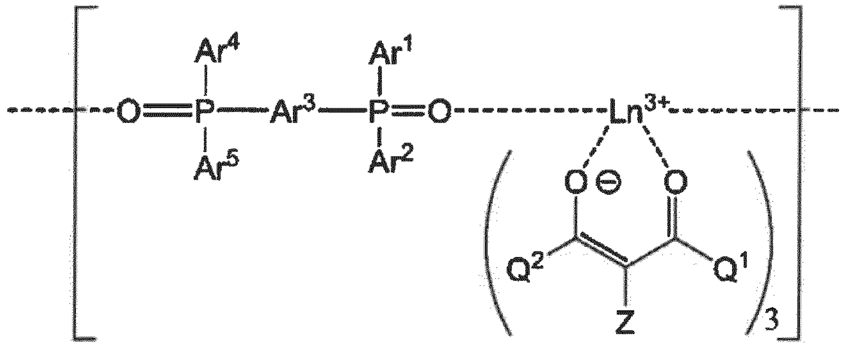

(6)

in the general formula (6), $Ln^{3+}$ is a trivalent rare-earth ion; $Ar^1$, $Ar^2$ and $Ar^3$ are the same as the general formula (1) ; $Ar^4$ and $Ar^5$ are the same as the general formula (3); and $Q^1$, $Q^2$ and Z are the same as the general formula (4).

As the mononuclear rare-earth complex described herein in general, examples include a mononuclear rare-earth complex represented by the following general formula (7):

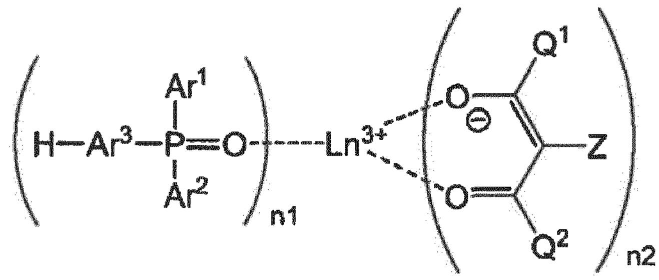

(7)

in the general formula (7), $Ln^{3+}$ is a trivalent rare-earth ion; $Ar^1$, $Ar^2$ and $Ar^3$ are the same as the general formula (1) ; $Q^1$, $Q^2$ and Z are the same as the general formula (4) : n1 is an integer of from 1 to 5; and n2 is an integer of from 1 to 4.

In the general formula (7), from the viewpoint of increasing light emission intensity, n1 is preferably 1 or 2, and n2 is preferably 2, 3 or 4. It is particularly preferable that n1 is 2 and n2 is 3.

The rare-earth complex can be synthesized by the following method, for example: a rare-earth metal compound, which is a raw material for the rare-earth ion, and a compound to be formed into the ligand are mixed in a solvent capable of dissolving or dispersing them, in the presence of a catalyst, as needed, thereby synthesizing the rare-earth complex. As the solvent, a mixture of solvents that are suitable for the rare-earth metal compound and for the compound to be formed into the ligand, may be used. For example, a dichloromethane/methanol mixed solvent may be used. As the catalyst, for example, trimethylamine, lithium hydroxide, etc., may be added as needed.

The rare-earth complex has characteristics as a fluorescent substance, and the wavelength ($\lambda$1) at which the light emission intensity is maximum, is not particularly limited. In general, it is 300 nm or more and 1600 nm or less.

The ink composition of the disclosed embodiments preferably contains, as the rare-earth complex, at least a red rare-earth complex such that the wavelength ($\lambda$1) at which the light emission intensity is maximum, is 600 nm or more and 650 nm or less, from the point of view that excellent luminance and color purity are obtained, and high visibility is obtained.

The rare-earth complex preferably has the maximum value in a range of from 350 nm to 400 nm of the excitation spectrum obtained by determining the maximum light emission wavelength of the light emission spectrum as the detection wavelength and measuring the light emission intensity by scanning the wavelength of excitation light. This is because from the point of view that excellent visibility is obtained when a commonly-available UV source is used as an authenticity determination device.

In the ink composition, the rare-earth complex may be one kind of rare-earth complex or a mixture of two or more kinds of rare-earth complexes. When the rare-earth complex is a mixture of two or more kinds of rare-earth complexes, the wavelength ($\lambda$1) at which the light emission intensity of the rare-earth complex is maximum, means the wavelength at which the light emission intensity of the mixture of the rare-earth complexes is maximum.

<Light-emitting material>

The light-emitting material contained in the ink composition of the disclosed embodiments, is a light-emitting material different from the rare-earth complex, and the absolute value of the difference between the wavelength ($\lambda$1) at

which the light emission intensity of the rare-earth complex is maximum and the wavelength (λ2) at which the light emission intensity of the light-emitting material is maximum, is 50 nm or more.

The light-emitting material may be appropriately selected from known light-emitting materials so that the ink composition of the disclosed embodiments is in a desired emitted light color, and it is not particularly limited.

From the viewpoint of the ease of obtaining a desired emitted light color, for the wavelength (λ2) at which the light emission intensity of the light-emitting material is maximum, the absolute value of the difference with the wavelength (λ1) at which the light emission intensity of the rare-earth complex is maximum, is preferably 50 nm or more and 300 nm or less, and more preferably 50 nm or more and 200 nm or less.

When a mixture of two or more kinds of the light-emitting materials is used, the wavelength (λ2) at which the light emission intensity of the light-emitting material is maximum, means the wavelength at which the light emission intensity of the mixture of the light-emitting materials is maximum. Accordingly, from the viewpoint of color control, etc., the light-emitting materials may include a light-emitting material such that the absolute value of the difference between the wavelength (λ1) at which the light emission intensity of the rare-earth complex is maximum and the wavelength at which the light emission intensity is maximum, is less than 50 nm.

The wavelength (λ1) at which the light emission intensity of the rare-earth complex is maximum and the wavelength (λ2) at which the light emission intensity of the light-emitting material is maximum, can be both obtained by use of the light emission spectrum measured by exciting the rare-earth complex, the light-emitting material or a mixture of the light-emitting materials itself (a solid) at a wavelength of 365 nm using a fluorospectrophotometer (e.g., "RF-6000" manufactured by Shimadzu Corporation).

As the light-emitting material, examples include a fluorescent light-emitting material capable of emitting light by UV irradiation. From the viewpoint of light resistance, an inorganic fluorescent light-emitting material is preferred.

As the fluorescent light-emitting material, examples include a known fluorescent dye and an inorganic or organic fluorescent pigment. As the fluorescent dye, examples include, but are not limited to, dyes such as a fluorescein-based dye, a coumarin-based dye, an oxazole-based dye, a pyrazoline-based dye, a spiropyran-based dye, a pyrenesulfonic acid-based dye, a benzimidazole-based dye and a diaminostilbene-based dye. As the organic fluorescent pigment, examples include, but are not limited to, a product obtained by uniformly dissolving a dye (e.g., fluorescein, eosin, Rhodamine 6G, Rhodamine B, Basic Yellow HG) in a resin (e.g., polyvinyl chloride resin, alkyd resin, poly(meth)acrylic acid ester resin, urea resin, melamine resin) and pulverizing them. As the inorganic fluorescent pigment, examples include, but are not limited to, zinc sulfide doped with copper, silver, manganese, aluminum or the like, zinc silicate doped with manganese, zinc sulfide doped with silver, copper or the like, calcium sulfide doped with cadmium, bismuth or the like, strontium sulfide doped with samarium, cerium or the like, calcium tungstate doped with lead or the like, $Sr_5(PO_4)_3Cl$ doped with europium, $Zn_2GeO_2$ doped with manganese, $Y_2O_2S$ doped with europium or the like, $Y_2O_3$ doped with europium or the like, $CaMgSi_2O_6$ doped with europium or the like, $Y(P,V)O_4$ doped with europium, $BaMgAl_{10}O_{17}$ doped with europium, manganese or the like, $BaMg_2Al_{16}O_{23}$ doped with europium, manganese, $LaPO_4$ doped with terbium, cerium or the like, and ZnO with oxygen defects.

As the light-emitting material, a commercially-available product may be used. As the commercially-available product used as the light-emitting material, preferred examples include phosphorescent pigments, special light-emitting substances, etc., manufactured by Nemoto Lumi-Materials Co., Ltd.

From the viewpoint of light-emitting properties, light resistance and availability, the light-emitting material is preferably $BaMgAl_{10}O_{17}$ doped with europium, $BaMgAl_{10}O_{17}$ doped with europium and manganese, $BaMg_2Al_{16}O_{23}$ doped with europium, $BaMg_2Al_{16}O_{23}$ doped with europium and manganese, $Y(P,V)O_4$ doped with europium, $Y_2O_2S$ doped with europium, ZnO with oxygen defects, and more preferably $BaMgAl_{10}O_{17}$ doped with europium, $BaMgAl_{10}O_{17}$ doped with europium and manganese, or ZnO with oxygen defects.

The light-emitting material is not limited to the materials capable of emitting fluorescence by UV irradiation. As the light-emitting material, a material capable of emitting light by infrared irradiation, may be used.

The light-emitting material preferably has the maximum value in a range of from 350 nm to 400 nm of the excitation spectrum obtained by determining the maximum light emission wavelength of the light emission spectrum as the detection wavelength and measuring the light emission intensity by scanning the wavelength of excitation light. This is because from the point of view that excellent visibility is obtained when a commonly-available UV source is used as an authenticity determination device.

<Other components>

As needed, the ink composition of the disclosed embodiments may further contain other components such as a vehicle and various kinds of additives, so that ink properties suited for a printing method are obtained without impairing the effects of the disclosed embodiments.

As the additives, examples include, but are not limited to, known assistant agents used for printing, such as a dispersant, a crosslinking agent, a drying promoter, a polymerization inhibitor, a wax, an extender pigment, a colorant,

a drying inhibitor, an antioxidant, a smoothing aid, an anti-offset agent, a defoaming agent or a surfactant.

(Vehicle)

A vehicle is a medium capable of forming a coating film when the rare-earth complex is dispersed and used for coating or printing. The vehicle used in the disclosed embodiments may contain known vehicle components used in ink, such as a resin, a solvent and a photocurable component.

The resin contained in the vehicle may be appropriately selected from known resins and used. For example, a known resin used for printing may be used, or a resin contained in an oil-based ink or UV ink may be used.

The resin may be a natural resin or a synthetic resin, and it may be a homopolymer or a copolymer. To secure the viscosity of the oil-based ink, the resin is preferably a solid. As the natural resin, examples include, but are not limited to, rosin, amber, shellac and gilsonite.

As the synthetic resin, examples include, but are not limited to, rosin, a phenolic resin, a modified alkyd resin, a polyester resin, a petroleum resin, a maleic acid resin (e.g., a rosin-modified maleic acid resin), a cyclized rubber, an acrylic resin, a one-component urethane resin, a two-component urethane resin, and other synthetic resins.

In the case of a water-based ink, for example, a watersoluble resin, a colloidal dispersion resin, an emulsion resin or the like may be contained.

The above-mentioned resins may be used solely or in combination of two or more kinds.

The solvent contained in the vehicle may be appropriately selected from known solvents and used.

As the solvent, examples include, but are not limited to, an organic solvent, a drying oil, a semidrying oil, a mineral oil and water.

The photocurable component contained in the vehicle may be appropriately selected from known photocurable components and used. The photocurable component contains a monomer, an oligomer, a photopolymerization initiator, etc.

As the monomer, examples include a compound containing an ethylenically unsaturated bond, which has been used for photopolymerization. The oligomer can be obtained by oligomerizing a compound containing an ethylenically unsaturated bond.

As the compound containing an ethylenically unsaturated bond, examples include, but are not limited to, a (meth)acrylic acid-based compound; a maleic acid-based compound; and a compound containing an ethylenically unsaturated double bond modified with a urethane-, epoxy-, polyester-, polyol- or vegetable oil-based compound.

The photopolymerization initiator is a compound capable of producing a radical (e.g., active oxygen) by UV irradiation, for example. The photopolymerization initiator may be appropriately selected from known photopolymerization initiators used for printing and then may be incorporated.

<Content ratio of components in ink composition>

In the ink composition of the disclosed embodiments, the total content ratio of the rare-earth complex and the light-emitting material with respect to the total solid content of the ink composition, is preferably 1% by mass or more, more preferably 3% by mass or more, and even more preferably 5% by mass or more, from the viewpoint of light emission intensity. From the viewpoint of ease of ink layer formation, when the above-mentioned other components are contained, the total content ratio of the rare-earth complex and the light-emitting material is preferably 60% by mass or less, more preferably 50% by mass or less, and even more preferably 40% by mass or less. In the disclosed embodiments, the "solid content" means components other than the solvent.

The ratio of the rare-earth complex with respect to the total (100 parts by mass) of the rare-earth complex and the light-emitting material contained in the ink composition of the disclosed embodiments, may be appropriately controlled to obtain a desired color. From the viewpoint of light emission intensity, it is preferably 1 part by mass or more, and more preferably 5 parts by mass or more. On the other hand, from the viewpoint of color control, it is preferably 95 parts by mass or less.

When the ink composition of the disclosed embodiments contains the above-mentioned other components, the ratio of the solid content derived from the above-mentioned other components with respect to the total solid content of the ink composition, is preferably 99% by mass or less, more preferably 97% by mass or less, and even more preferably 95% by mass or less, from the viewpoint of light emission intensity.

When the ink composition of the disclosed embodiments contains the solvent, the ratio of the solid content with respect to the total amount of the ink composition containing the solvent, is appropriately controlled depending on a printing method, and is not particularly limited. From the viewpoint of printing properties, it is preferably 5% by mass or more and 80% by mass or less, and more preferably 10% by mass or more and 60% by mass or less.

<Properties of ink composition>

A conventional ink composition is difficult to be controlled to a desired emitted light color with high light emission intensity. Especially, it is difficult to obtain white emitted light color with excellent light emission intensity.

The ink composition of the present invention can be controlled to a desired emitted light color with high light emission intensity. Accordingly, it can be a white light-emitting ink composition with excellent light emission intensity.

The ink composition of the disclosed embodiments preferably has the maximum value in a range of from 350 nm to 400 nm of the excitation spectrum obtained by determining, for the solid content (a coating film) of the ink composition, the maximum light emission wavelength of the light emission spectrum as the detection wavelength and measuring the light emission intensity by scanning the wavelength of excitation light. This is because from the point of view that excellent visibility is obtained when a commonly-available UV source is used as an authenticity determination device.

<Method for producing ink compositions

The method for producing the ink composition of the disclosed embodiments is not particularly limited, as long as it is a method by which the above-described ink composition of the disclosed embodiments is obtained. As the production method, examples include a method of mixing the rare-earth complex, the light-emitting material and the above-mentioned other components used as needed, by a known mixing means.

The mixing and dispersion of the components may be carried out by, for example, a mixer such as a uniaxial mixer and a biaxial mixer, or an ink mill such as a three-roller mill, a beads mill, a ball mill, a sand grinder and an attritor.

<Applications of ink composition>

The ink composition of the disclosed embodiments is not particularly limited, and it is invisible in visible light and emits fluorescence by irradiation with excitation light other than visible light. Accordingly, due to its unique light emission characteristics, it is preferably used for authenticity determination purposes, anti-counterfeiting purposes, and various kinds of security purposes.

2. Printed product

The printed product of the disclosed embodiments is a printed product comprising an ink layer containing a solidified product of the ink composition of the disclosed embodiments.

FIG. 1 is a schematic sectional view of an example of the printed product of the disclosed embodiments. A printed product 1 comprises an ink layer 11 on one surface of a substrate 10. The ink layer 11 is a layer containing a solidified product of the ink composition of the disclosed embodiments, and it is formed by use of the ink composition of the disclosed embodiments.

For the printed product of the disclosed embodiments, the solidified product of the ink composition of the disclosed embodiments contained in the ink layer, achieves a desired emitted light color with excellent light emission intensity, and it has excellent light resistance. Accordingly, the ink layer emits a desired emitted light color with excellent light emission intensity, and it has excellent light resistance. Accordingly, the printed product of the disclosed embodiments can be designed with a highly counterfeit-proof emitted light color or light emission pattern, and a practical printed product with high anti-counterfeit property and good design, can be provided.

The printed product 1 of the disclosed embodiments may comprise one or more ink layers 11. When a plurality of ink layers 11 are disposed on the substrate 10, the compositions of the ink compositions forming the ink layers may be the same or different. The ink layer 11 may have a desired pattern.

The printed product of the disclosed embodiments comprises at least the ink layer. As needed, it may further comprise a substrate for supporting the ink layer, and other layers, as long as the effect of the disclosed embodiments are not impaired.

<Ink layer>

The ink layer of the printed product of the disclosed embodiments is the ink layer containing the solidified product of the ink composition of the disclosed embodiments. That is, it is the ink layer formed with the ink composition of the disclosed embodiments.

The ink composition of the disclosed embodiments will not be described here, since it is as described above.

In the disclosed embodiments, the "solidified product" means a product solidified through or not through a chemical reaction. As the solidified product, examples include, but are not limited to, a cured product cured by a curing reaction, a product solidified by drying, and a product solidified by cooling a thermoplastic resin.

The ink layer can be formed by applying the ink composition of the disclosed embodiments on a substrate serving as a support and solidifying the applied ink composition.

The ink composition can be applied by a known applying method such as, but not limited to, intaglio printing, relief printing, offset printing, screen printing, gravure printing, flexographic printing, inkjet printing, spray printing, bar coating, roll coating, spin coating, slit coating, die coating and dip coating.

The method for solidifying the ink composition is appropriately selected depending on the components contained in the ink composition and is not particularly limited. As the solidifying method, examples include, but are not limited to, the following methods: when the ink composition contains a solvent, the method of removing the solvent by drying; when the ink composition contains a photocurable resin, the method of curing the photocurable resin by light irradiation; when the ink composition contains a heat-curable resin, the method of drying the heat-curable resin by heating; when the ink composition contains a thermosetting resin, the method of melting the thermosetting resin and solidifying the melted resin by cooling; and combinations thereof.

The ink layer may be formed on one surface or both surfaces of the substrate, and it may be formed in a pattern.

Whether the ink layer contains the solidified product of the ink composition of the disclosed embodiments, can be confirmed by taking a sample material from the ink layer and analyzing the sample material. As the analyzing method, examples include mass spectrometry (e.g., ESI-Mass), NMR, IR, inductively coupled plasma atomic emission spectroscopy, atomic absorption spectrometry, X-ray fluorescence spectrometry, X-ray absorption fine structure (XAFS) analysis, and combinations thereof. The analysis of the rare-earth metal can be carried out by use of multi-element inductively coupled plasma atomic emission spectrometer ICPE-9000 manufactured by Shimadzu Corporation, for example.

<Substrate>

As the substrate, examples include, but are not limited to, papers such as a wood free paper, an art paper, a coated paper, a cast-coated paper, a synthetic resin- or emulsion-impregnated paper, a synthetic rubber latex-impregnated paper, a synthetic resin-added paper and a cellulose fiber paper; plastic sheets of various kinds of synthesis resins such as polyolefin (e.g., polyethylene, polypropylene, etc.), polystyrene, polycarbonate, polyethylene terephthalate, polyvinyl chloride and polymethacrylate; and white non-transparent films formed by adding a white pigment or a filler to these synthesis resins and forming the resins in the form of a film, or a film composed of a substrate containing microvoids therein (a so-called synthetic paper). The substrate is not needed to be in a film or sheet form, and it may be a molded resin product having a three-dimensional structure, for example.

<Applications of printed product>

The applications of the printed product of the disclosed embodiments are not particularly limited. Since the ink layer has characteristics as a fluorescent substance, the printed product of the disclosed embodiments is suitably used as an anti-counterfeit printed product. As the anti-counterfeit printed product, examples include, but are not limited to, bills, checks, stock certificates, debenture stocks, marketable securities (e.g., various kinds of securities), banknotes, gift certificates, transportation tickets, admission tickets for paid facilities and events, lottery tickets, winning betting tickets for public sports, stamps, cards (e.g., credit cards), passports, ID cards, various kinds of commercial printed products and posters.

Examples

The following IR measurement was carried out by use of FT/IR-350 manufactured by Nikon Corporation.

The following $^1$H-NMR measurement was carried out by use of ESC400 (400 MHz) manufactured by JEOL Ltd., and tetramethylsilane (TMS) was used as the internal standard for chemical shift determination.

The following ESI-Mass measurement was carried out by use of THERMO SCIENTIC EXACTIVE manufactured by Thermo Fisher Scientific.

In the following elemental analysis, organic elemental microanalysis was carried out by use of CE440 manufactured by Exeter Analytical Inc.

(Synthesis Example 1: Synthesis of 1,4-bis(diphenylphosphoryl)biphenyl)

A 100 mL three-neck flask was frame-dried to replace the inside with argon gas. To this three-neck flask, 1.9 g (6.0 mmol) of 4,4'-dibromobiphenyl and 30 mL of tetrahydrofuran (THF) were added and cooled to about -80°C with liquid nitrogen/ethanol. To this solution, 9.3 mL (15 mmol) of a 1.6 M n-butyllithium hexane solution was slowly added with a syringe. This addition was carried out for about 15 minutes. During the addition, a yellow precipitate was produced. This solution was stirred at -10°C for 3 hours. Next, the solution was cooled again to -80°C. Then, 2.7 mL (15 mmol) of

dichlorophenyl phosphide was dropwise added to the solution, and while stirring the solution for 14 hours, the temperature of the solution was gradually returned to room temperature. Then, the reaction was terminated, and extraction was carried out with ethyl acetate. The thus-obtained solution was washed three times with saturated brine and dried with anhydrous magnesium sulfate. Then, the solvent was evaporated with an evaporator. A crude product thus obtained was washed several times with acetone and ethanol to be purified, thereby obtaining a white powder.

Next, the white powder and about 40 mL of dichloromethane were put in a flask. The resulting solution was cooled to 0°C, and a 30% hydrogen peroxide solution (about 5 mL) was added thereto. The mixture was stirred for two hours. The resulting product was extracted with dichloromethane. Then, the extract was washed three times with saturated brine and dried with anhydrous magnesium sulfate. Then, the solvent was evaporated with an evaporator, thereby obtaining a white powder. The white powder was recrystallized with dichloromethane to obtain a white crystal of 1,4-bis(diphenylphosphoryl)biphenyl.

The analysis results of the white crystal were as follows. IR(ATR): 1119(st, P=O)$cm^{-1}$.
$^1H$-NMR (400MHz, $CDCl_3$, 25°C) 67.65 - 7.80 (m, 16H;P-$C_6H_5$, $C_6H_4$), 7.43-7.60 (m, 12H; P-$C_6H_5$, $C_6H_4$)ppm.
ESI-Mass(m/z)=555.2$[M+H]^+$.

Elemental analysis:

(calculated value for $C_{36}H_{28}O_2P_2$) : C, 77 . 97 ;H, 5.09%,
(actual measured value):C,77.49;H,5.20%

(Synthesis Example 2: Synthesis of red rare-earth complex 1)

Europium acetate, which is a raw material for Eu(III) ion, and 1,1,1,5,5,5-hexafluoro-2,4-pentanedione were mixed to synthesis tris(hexafluoroacetylacetonato(hfa))europium(III) dihydrate.

Next, 1 equivalent of the tris(hexafluoroacetylacetonato)europium(III) dihydrate and 1 equivalent of the 1,4-bis(diphenylphosphoryl)biphenyl (dpbp) obtained in Synthesis Example 1 were dissolved in methanol (20 mL). The solution was refluxed while stirring for 8 hours. Then, a white powder precipitated in the reaction solution was separated by filtration, washed several times with methanol, and then dried under reduced pressure, thereby obtaining a red rare-earth complex 1 $[Eu(hfa)_3(dpbp)]_n$ represented by the following chemical formula (A):

Chemical Formula (A)

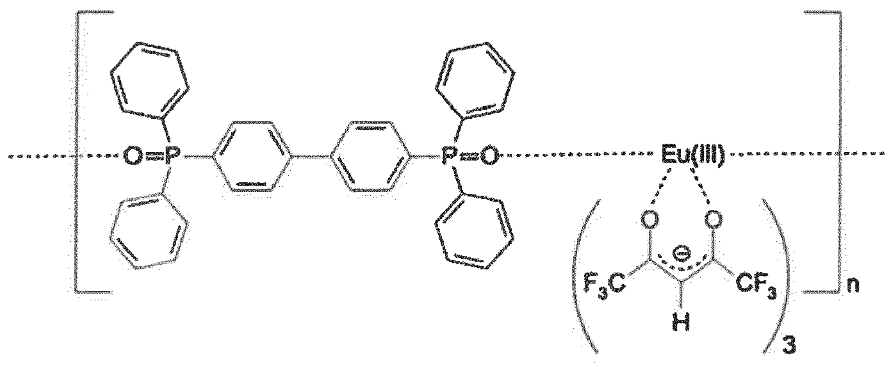

The analysis results of the obtained red rare-earth complex 1 were as follows.
IR(ATR) :1652(st,C=O), 1250(st,C-F), 1122(st,P=O)$cm^{-1}$ ESI-Mass(m/z)= 1675.2 $Eu(hfa)_2(dpbp)_2]^+$, 1905.2 $[[Eu(hfa)_3(dpbp)_2] + Na]^+$

Elemental analysis:

(calculated value for $[C_{51}H_{31}EuF_{18}O_8P_2]_n$) : C, 46.14;H, 2.35%,
(actual measured value):C,46.10;H,2.17%

The light emission spectrum of the red rare-earth complex 1 was measured by excitation at a wavelength of 365 nm using fluorospectrophotometer RF-6000 (manufactured by Shimadzu Corporation). As a result, the wavelength at which the light emission intensity is maximum, was 613 nm.

(Synthesis Example 3: Synthesis of red rare-earth complex 2)

A methanol solution containing tris(hexafluoroacetylacetonato)europium(III) synthesized in the same manner as Synthesis Example 2 and triphenylphosphine oxide (TPPO) was prepared. The solution was stirred for 12 hours while refluxing the solution. Then, the methanol was distilled under reduced pressure, thereby obtaining a white powder. The powder was washed with toluene, and unreacted tris(hexafluoroacetylacetonato)europium(III) was removed therefrom by suction filtration. Then, the toluene was distilled under reduced pressure. A product thus obtained was washed with hexane, thereby obtaining a powder. In addition, the powder was purified by recrystallization using a mixed solvent of toluene and hexane, thereby obtaining a red rare-earth complex 2 [$Eu(hfa)_3(TPPO)_2$] represented by the following chemical formula (B) :

Chemical Formula (B)

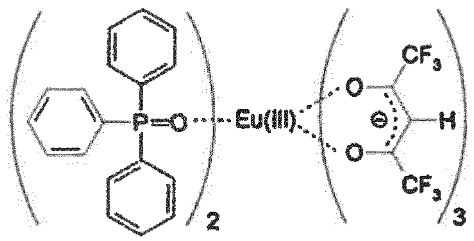

The analysis results of the obtained red rare-earth complex 2 were as follows;

IR($cm^{-1}$) : 1652 (C=O),1251(C-F),1121(P=O),
ESI-Mass (m/z) = 1123.1 [$Eu(hfa)_2(TPPO)_2]^+$, 1353.1 [[$Eu(hfa)_3(TPPO)_2$]+Na]$^+$

Elemental analysis:

(calculated value for [$C_{51}H_{33}EuF_{18}O_8P_2$):C,46.07;H,2.50%,
(actual measured value):C,46.10;H,2.34%

The light emission spectrum of the red rare-earth complex 2 was measured in the same manner as the red rare-earth complex 1. As a result, the wavelength at which the light emission intensity is maximum, was 617 nm.

(Synthesis Example 4: Synthesis of red rare-earth complex 3)

Europium chloride, which is a raw material for Eu(III) ion, and 4,4,4,-trifluoro-1-(2-thienyl)-1,3-butanedione were mixed in a water/methanol mixed solvent to which a sodium hydroxide aqueous solution was added, thereby synthesizing tris(2-thenoyltrifluoroacetonato(tta))europium dihydrate.

Next, 0.5 equivalent of the tris(2-thenoyltrifluoroacetonato)europium(III) dihydrate, 0.5 equivalent of tris(hexafluoroacetylacetonato)europium(III) dihydrate synthesized in the same manner as Synthesis Example 2, and 1 equivalent of the 1,4-bis(diphenylphosphoryl)biphenyl obtained in Synthesis Example 1, were dissolved in methanol (20 mL). The solution was refluxed while stirring the solution for 8 hours. Then, a white powder precipitated in the reaction solution was separated by filtration, washed several times with methanol, and dried under reduced pressure, thereby obtaining a red rare-earth complex 3 represented by the following chemical formula (C), which is a copolymer containing repeating units of the following chemical formulae (C-1), (C-2) and (C-3):

Chemical Formula (C)

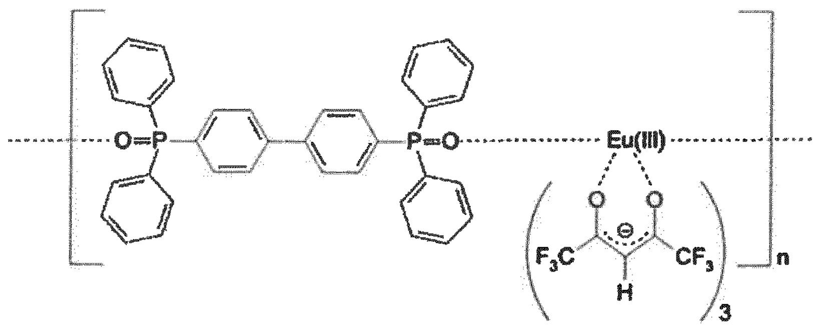

(C－1)

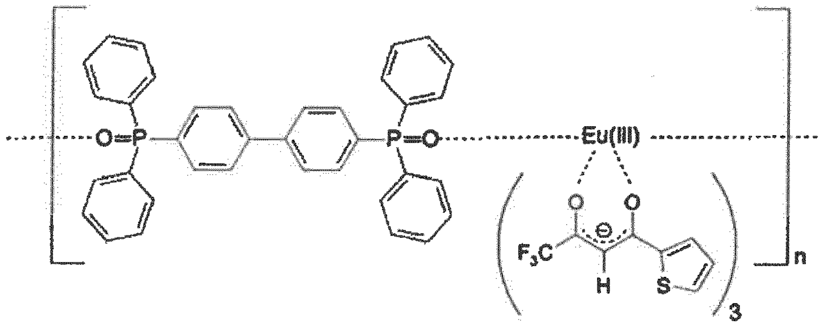

(C－2)

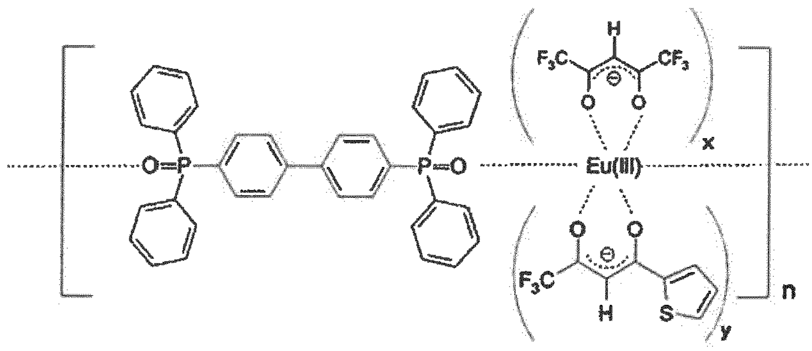

(C－3)

(x = 1, y = 2 or x = 2, y = 1)

The analysis results of the obtained red rare-earth complex 3 were as follows.

IR(ATR) :1652(st,C=O), 1250(st,C-F), 1122(st,P=O)$cm^{-1}$

ESI-Mass (m/z) = 1675.2 $[Eu(hfa)_2(dpbp)_2]^+$, 1689.2$[Eu(hfa)(tta)(dpbp)_2]^+$, 1703.2$[Eu(tta)_2(dpbp)_2]^+$ , 1905.2 $[[Eu(hfa)_3(dpbp)_2] + Na]^+$, 1919.2 $[[Eu(hfa)_2(tta)(dpbp)_2] + Na]^+$, 1933.2 $[[Eu(hfa)(tta)_2(dpbp)_2] + Na]^+$, 1947.2 $[[Eu(tta)_3(dpbp)_2]+ Na]^+$

Elemental analysis:actual measured value C,49.55;H,2.47%, β-diketone ligand ratio: hfa/tta = 48/52(mol%)

The light emission spectrum of the red rare-earth complex 3 was measured by excitation at a wavelength of 365 nm using fluorospectrophotometer RF-6000 (manufactured by Shimadzu Corporation). As a result, the wavelength at which the light emission intensity is maximum, was 616 nm.

(Synthesis Example 5: Synthesis of red rare-earth complex 4)

Europium chloride, which is a raw material for Eu(III) ion, and 4,4,4,-trifluoro-1-phenyl-1,3-butanedione were

mixed in a water/methanol mixed solvent to which a sodium hydroxide aqueous solution was added, thereby synthesizing tris(benzoyltrifluoroacetonato(btfa))europium(III) dihydrate.

Next, 0.5 equivalent of the tris(benzoyltrifluoroacetonato)europium(III) dihydrate, 0.5 equivalent of tris(hexafluoroacetylacetonato)europium(III) dihydrate synthesized in the same manner as Synthesis Example 2, and 1 equivalent of the 1,4-bis(diphenylphosphoryl)biphenyl obtained in Synthesis Example 1 were dissolved in methanol (20 mL). The solution was refluxed while stirring the solution for 8 hours. Then, a white powder precipitated in the reaction solution was separated by filtration, washed several times with methanol, and then dried under reduced pressure, thereby obtaining a red rare-earth complex 4 represented by the following chemical formula (D), which is a copolymer containing repeating units of the following chemical formulae (D-1), (D-2) and (D-3) .

Chemical Formula (D)

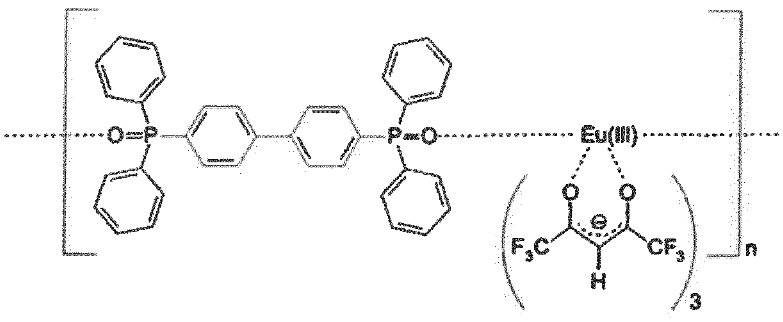

(D－1)

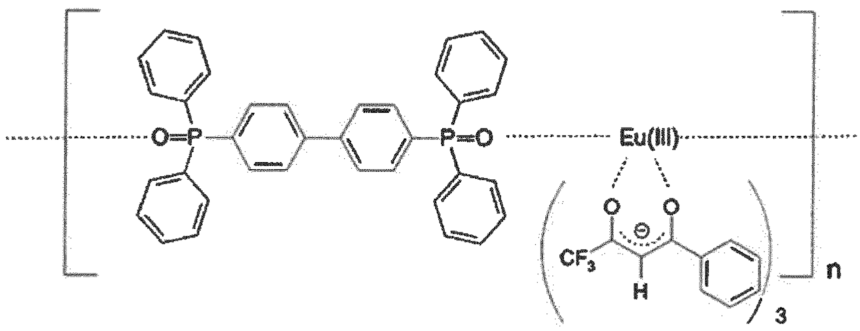

(D－2)

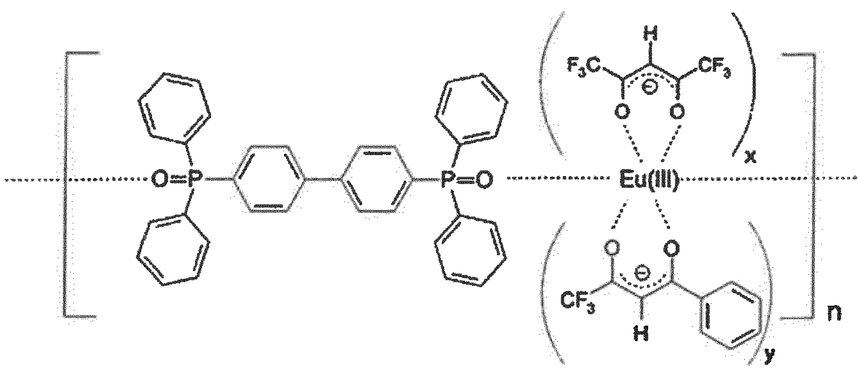

(D－3)

(x = 1, y = 2 or x = 2, y = 1)

The analysis results of the obtained red rare-earth complex 4 were as follows.

IR(ATR) :1652(st,C=O), 1250(st,C-F), 1122(st,P=O)$cm^{-1}$

ESI-Mass(m/z)= 1675.2 $[Eu(hfa)_2(dpbp)_2]^+$, 1683.2 $[Eu(hfa)(btfa)(dpbp)_2]^+$, 1691.3 $[Eu(btfa)_2(dpbp)_2]^+$, 1905.2 $[[Eu(hfa)_3(dpbp)_2] + Na]^+$, 1913.2 $[[Eu(hfa)_2(btfa)(dpbp)_2] + Na]^+$, 1921.3 $[[Eu(hfa)(btfa)_2(dpbp)_2] + Na]^+$, 1929.3 $[[Eu(btfa)_3(dpbp)_2] + Na]^+$

Elemental analysis:actual measured value C,52.85;H,2.74%, β-diketone ligand ratio: hfa/btfa = 47/53(mol%)

The light emission spectrum of the red rare-earth complex 4 was measured by excitation at a wavelength of 365 nm using fluorospectrophotometer RF-6000 (manufactured by Shimadzu Corporation). As a result, the wavelength at which the light emission intensity is maximum, was 617 nm.

(Reference Example 1)

(1) Preparation of white light-emitting ink composition 1

As a vehicle, 70 parts by mass of a UV curable vehicle (product name: UV BF SG A MEDIUM, manufactured by: DIC Graphics Corporation) and 30 parts by mass of a light-emitting substance powder mixture mixed at the following ratio, were mixed by three rollers, thereby preparing a white light-emitting ink composition 1.

The mixing ratio of the light-emitting substance powder mixture was as shown below.

- Red light-emitting substance: The red rare-earth complex 1 (the wavelength at which the light emission intensity is maximum: 613 nm) 70 parts by mass
- Green light-emitting substance: GOF-SS (manufactured by: Nemoto Lumi-Materials Co., Ltd., the wavelength at which the light emission intensity is maximum: 500 nm) 10 parts by mass
- Blue light-emitting substance: D1184 (manufactured by: Nemoto Lumi-Materials Co., Ltd., the wavelength at which the light emission intensity is maximum: 447 nm) 20 parts by mass

(2) Production of printed product

The thus-obtained white light-emitting ink composition 1 was applied to a printing paper with a bar coater. Then, the applied ink composition was photo-cured by UV irradiation to form an ink layer, thereby obtaining the printed product of Reference Example 1.

(Reference Example 2 and Examples 7 and 8)

(1) Preparation of white light-emitting ink compositions 2, 3, 4

White light-emitting ink compositions 2, 3, 4 were prepared in the same manner as "(1) Preparation of white light-emitting ink composition 1" in Reference Example 1, except the following: as the red light-emitting substance of the light-emitting substance powder mixture, the red rare-earth complex 2 obtained in Synthesis Example 3 (the wavelength at which the light emission intensity is maximum: 617 nm), the red rare-earth complex 3 obtained in Synthesis Example 4 (the wavelength at which the light emission intensity is maximum: 616 nm) or the red rare-earth complex 4 obtained in Synthesis Example 5 (the wavelength at which the light emission intensity is maximum: 617 nm) was used in place of the red rare-earth complex 1 obtained in Synthesis Example 2, and the mixing ratio of the red, green and blue light-emitting substances was changed as shown in Table 1.

(2) Production of printed product

The printed products of Reference Example 2 and Examples 7 and 8 were obtained in the same manner as "(2) Production of printed product" in Reference Example 1, except that the white light-emitting ink composition 2, 3 or 4 was used in place of the white light-emitting ink composition 1.

(Comparative Example 1)

(1) Preparation of comparative white ink composition 1

A comparative white light-emitting ink composition 1 was prepared in the same manner as "(1) Preparation of white light-emitting ink composition 1" in Reference Example 1, except that as the red light-emitting substance of the light-emitting substance powder mixture, 4 parts by mass of the a comparative red rare-earth complex 1 represented

by the following chemical formula (E) (Eu(tta)$_3$(Phen) manufactured by Tokyo Chemical Industry Co., Ltd., the wavelength at which the light emission intensity is maximum: 612 nm) was used in place of 70 parts by mass of the red rare-earth complex 1 obtained in Synthesis Example 2, and the amount of the added green light-emitting substance and that of the added blue light-emitting substance were changed to 30 parts by mass and 66 parts by mass, respectively.

Chemical Formula (E)

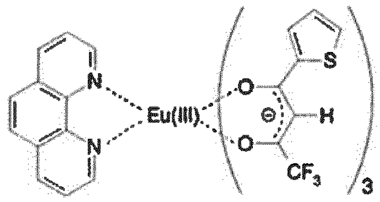

(2) Production of printed product

The printed product of Comparative Example 1 was obtained in the same manner as "(2) Production of printed product" in Reference Example 1, except that the comparative white light-emitting ink composition 1 was used in place of the white light-emitting ink composition 1.

(Comparative Example 2)

(1) Preparation of comparative white light-emitting ink composition 2

A comparative white light-emitting ink composition 2 was prepared in the same manner as "(1) Preparation of white light-emitting ink composition 1" in Reference Example 1, except that as the red light-emitting substance of the light-emitting substance powder mixture, 90 parts by mass of a red light-emitting inorganic oxide (product name: D1124, manufactured by: Nemoto Lumi-Materials Co., Ltd.) was used in place of 70 parts by mass of the red rare-earth complex 1 obtained in Synthesis Example 2, and the amount of the added green light-emitting substance and that of the added blue light-emitting substance were changed to 3.3 parts by mass and 6.7 parts by mass, respectively.

(2) Production of printed product

The printed product of Comparative Example 2 was obtained in the same manner as "(2) Production of printed product" in Reference Example 1, except that the comparative white light-emitting ink composition 2 was used in place of the white light-emitting ink composition 1.

(Reference Example 3)

(1) Preparation of yellow light-emitting ink composition 1

A yellow light-emitting ink composition 1 was prepared in the same manner as "(1) Preparation of white light-emitting ink composition 1" in Reference Example 1, except that the light-emitting substance powder mixture was changed to a light-emitting substance powder mixture mixed at the following ratio.

The mixing ratio of the light-emitting substance powder mixture was as follows.

- Red light-emitting substance: Red rare-earth complex 1 (the wavelength at which the light emission intensity is maximum: 613 nm) 90 parts by mass
- Green light-emitting substance: GOF-SS (manufactured by: Nemoto Lumi-Materials Co., Ltd., the wavelength at which the light emission intensity is maximum: 500 nm) 10 parts by mass

(2) Production of printed product

The printed product of Reference Example 3 was obtained in the same manner as "(2) Production of printed product" in Reference Example 1, except that the yellow light-emitting ink composition 1 was used in place of the white light-emitting ink composition 1.

(Reference Example 4 and Examples 9 and 10)

(1) Preparation of yellow light-emitting ink compositions 2, 3, 4

Yellow light-emitting ink compositions 2, 3, 4 were produced in the same manner as "(1) Preparation of yellow light-emitting ink composition 1" in Reference Example 3, except that as the red light-emitting substance of the light-emitting substance powder mixture, the red rare-earth complex 2 obtained in Synthesis Example 3, the red rare-earth complex 3 obtained in Synthesis Example 4, or the red rare-earth complex 4 obtained in Synthesis Example 5 was used in place of the red rare-earth complex 1 obtained in Synthesis Example 2, and the mixing ratio of the red and green light-emitting substances was changed as shown in Table 1.

(2) Production of printed products

The printed products of Reference Example 4 and Examples 9 and 10 were obtained in the same manner as "(2) Production of printed product" in Reference Example 1, except that the yellow light-emitting ink compositions 2, 3, 4 were used in place of the white light-emitting ink composition 1.

(Comparative Example 3)

(1) Preparation of comparative yellow light-emitting ink composition 1

A comparative yellow light-emitting ink composition 1 was prepared in the same manner as "(1) Preparation of yellow light-emitting ink composition 1" in Reference Example 3, except that as the red light-emitting substance of the light-emitting substance powder mixture, 10 parts by mass of the comparative red rare-earth complex 1 ($Eu(tta)_3(Phen)$ manufactured by Tokyo Chemical Industry Co., Ltd. was used in place of 70 parts by mass of the red rare-earth complex 1 obtained in Synthesis Example 2, and the amount of the added green light-emitting substance was changed to 90 parts by mass.

(2) Production of printed product

The printed product of Comparative Example 3 was obtained in the same manner as "(2) Production of printed product" in Reference Example 1, except that the comparative yellow light-emitting ink composition 1 was used in place of the white light-emitting ink composition 1.

(Comparative Example 4)

(1) Preparation of comparative yellow light-emitting ink composition 2

A comparative yellow light-emitting ink composition 2 was prepared in the same manner as "(1) Preparation of yellow light-emitting ink composition 1" in Reference Example 3, except that as the red light-emitting substance of the light-emitting substance powder mixture, 98 parts by mass of the red light-emitting inorganic oxide (product name: D1124, manufactured by: Nemoto Lumi-Materials Co., Ltd.) was used in place of 70 parts by mass of the red rare-earth complex 1 obtained in Synthesis Example 2, and the amount of the added green light-emitting substance was changed to 2 parts by mass.

(2) Production of printed product

The printed product of Comparative Example 4 was obtained in the same manner as "(2) Production of printed product" in Reference Example 1, except that the comparative yellow light-emitting ink composition 2 was used in place of the white light-emitting ink composition 1.

(Reference Example 5)

(1) Preparation of violet light-emitting ink composition 1

A violet light-emitting ink composition 1 was prepared in the same manner as "(1) Preparation of white light-emitting ink composition 1" in Reference Example 1, except that the light-emitting substance powder mixture was changed to a light-emitting substance powder mixture mixed at the following ratio.

The mixing ratio of the light-emitting substance powder mixture was as shown below.

- Red light-emitting substance: Red rare-earth complex 1 (the wavelength at which the light emission intensity is maximum: 613 nm) 20 parts by mass
- Blue light-emitting substance: D1184 (manufactured by: Nemoto Lumi-Materials Co., Ltd., the wavelength at which the light emission intensity is maximum: 447 nm) 80 parts by mass

(2) Production of printed product

The printed product of Reference Example 5 was obtained in the same manner as "(2) Production of printed product" in Reference Example 1, except that the violet light-emitting ink composition 1 was used in place of the white light-emitting ink composition 1.

(Reference Example 6 and Examples 11 and 12)

(1) Preparation of violet light-emitting ink compositions 2, 3, 4

Violet light-emitting ink compositions 2, 3, 4 were prepared in the same manner as "(1) Preparation of violet light-emitting ink composition 1" of Reference Example 5, except that as the red light-emitting substance of the light-emitting substance powder mixture, the red rare-earth complex 2 obtained in Synthesis Example 3, the red rare-earth complex 3 obtained in Synthesis Example 4, or the red rare-earth complex 4 obtained in Synthesis Example 5 was used in place of the red rare-earth complex 1 obtained in Synthesis Example 2, and the mixing ratio of the red light-emitting substance and the blue light-emitting substance was changed as shown in Table 1.

(2) Production of printed products

The printed products of Reference Example 6 and Examples 11 and 12 were obtained in the same manner as "(2) Production of printed product" in Reference Example 1, except that the violet light-emitting ink compositions 2, 3, 4 were used in place of the white light-emitting ink composition 1.

(Comparative Example 5)

(1) Preparation of comparative violet light-emitting ink composition 1

A comparative violet light-emitting ink composition 1 was prepared in the same manner as "(1) Preparation of violet light-emitting ink composition 1" in Reference Example 5, except that as the red light-emitting substance of the light-emitting substance powder mixture, 0.5 parts by mass of the comparative rare-earth complex 1 $(Eu(tta)_3(Phen))$ manufactured by Tokyo Chemical Industry Co., Ltd. was used in place of 20 parts by mass of the red rare-earth complex 1 obtained in Synthesis Example 1, and the amount of the added blue light-emitting substance was changed to 95.5 parts by mass.

(2) Production of printed product

The printed product of Comparative Example 5 was obtained in the same manner as "(2) Production of printed product" in Reference Example 1, except that the comparative violet light-emitting ink composition 1 was used in place of the white light-emitting ink composition 1.

(Comparative Example 6)

(1) Preparation of comparative violet light-emitting ink composition 2

A comparative violet light-emitting ink composition 2 was prepared in the same manner as "(1) Preparation of violet light-emitting ink composition 1" in Reference Example 5, except that as the red light-emitting substance of the light-emitting substance powder mixture, 60 parts by mass of the red light-emitting inorganic oxide (product name: D1124, manufactured by: Nemoto Lumi-Materials Co., Ltd.) was used in place of 20 parts by mass of the red rare-earth complex 1 obtained in Synthesis Example 1, and the amount of the added blue light-emitting substance was changed to 40 parts by mass.

(2) Production of printed product

The printed product of Comparative Example 6 was obtained in the same manner as "(2) Production of printed product" in Reference Example 1, except that the comparative violet light-emitting ink composition 2 was used in place of the white light-emitting ink composition 1.

(Reference Example A)

Light emission spectrum measurement and excitation spectrum measurement of the single color light-emitting ink layers of the printed products in the red light-emitting substance single colors of the red rare-earth complexes 1 to 4 obtained in Synthesis Examples 2 to 5, the comparative red rare-earth complex 1 ($Eu(tta)_3(Phen)$ manufactured by Tokyo Chemical Industry Co., Ltd., the red light-emitting inorganic oxide (product name: D1124, manufactured by: Nemoto Lumi-Materials Co., Ltd.) were carried out.

<Ink printed product production>

As a vehicle, 70 parts by mass of a UV-curable vehicle (product name: UV BF SG A MEDIUM, manufactured by: DIC Graphics Corporation) and 30 parts by mass of each red light-emitting substance were mixed by three rollers and prepared.

A red light-emitting ink composition thus obtained was applied to a printing paper with a bar coater. Then, the applied ink composition was photo-cured by UV irradiation to form an ink layer, thereby obtaining a red light-emitting printed product.

<Light emission spectrum measurement>

For the ink layer of the obtained printed product, the light emission spectrum obtained by excitation at a wavelength of 365 nm using fluorospectrophotometer RF-6000 (manufactured by Shimadzu Corporation) was measured.

The light emission spectra of the single color light-emitting ink layers of the printed products in the red light-emitting substance single colors are each shown in FIGS. 21 to 26.

<Excitation spectrum measurement>

An excitation spectrum was measured by determining the wavelength at which the light emission intensity is maximum in the above light emission spectrum as the detection wavelength and using fluorospectrophotometer RF-6000 (manufactured by Shimadzu Corporation).

The excitation spectra of the single color light-emitting ink layers of the printed products in the red light-emitting substance single colors are each shown in FIGS. 27 to 32.

(Reference Example B)

(2) Preparation of standard red light-emitting ink composition

A standard red light-emitting ink composition was prepared in the same manner as "(1) Preparation of white light-emitting ink composition 1" in Reference Example 1, except that in place of 30 parts by mass of the light-emitting substance powder mixture, 30 parts by mass of the red light-emitting inorganic oxide (product name: D1124, manufactured by Nemoto Lumi-Materials Co., Ltd.) only was used.

(2) Production of printed product

The printed product of the standard red light-emitting ink composition was obtained in the same manner as "(2) Production of printed product" in Reference Example 1, except that the standard red light-emitting ink composition was used in place of the white light-emitting ink composition 1.

[Evaluation]

<Light emission spectrum measurement>

For a standard sample and the ink layers of the printed products obtained in the above-mentioned examples

and comparative examples, the light emission spectrum obtained by excitation at a wavelength of 365 nm using fluorospectrophotometer RF-6000 (manufactured by Shimadzu Corporation) was measured. The obtained light emission spectra are shown in FIGS. 1 to 20.

As the standard sample, the printed product of the standard red light-emitting ink composition prepared in Reference Example B, was used.

From the light emission peak area in 390 to 720 nm of the obtained light emission spectrum, the light emission intensity was evaluated by the following evaluation criteria. The evaluation results are shown in Table 1.

[Light emission intensity evaluation criteria]

A: The light emission peak area is 200% or more with respect to the light emission peak area of the standard sample.
C: The light emission peak area is less than 200% with respect to the light emission peak area of the standard sample.

<Light resistance test>

The ink layers of the printed products obtained in the above-mentioned examples and comparative examples were each irradiated with light using light resistance tester Ci4000 manufactured by ATLAS and a Xe lamp (irradiation intensity 1.2 $W/m^2$ (420 nm),) for 20 hours. Then, the light emission spectra measured by excitation at a wavelength of 365 nm using fluorospectrophotometer RF-6000 (manufactured by Shimadzu Corporation) was measured. The light resistance was evaluated by the following evaluation criteria. The evaluation results are shown in Table 1.

[Light resistance evaluation criteria]

A: The maximum light emission intensity retention rate was 90% or more before and after light irradiation.
B: The maximum light emission intensity retention rate was 80% or more and less than 90% before and after light irradiation.
C: The maximum light emission intensity retention rate was less than 80% before and after light irradiation.

The maximum light emission intensity retention rate was obtained by the following formula:

Maximum light emission intensity retention rate (%) = (Maximum light emission intensity after light irradiation / Maximum light emission intensity before light irradiation) × 100

<Solvent resistance test>

For the white light-emitting ink layers of the printed products of Reference Examples 1 and 2, Examples 7 and 8, Comparative Examples 1, 2, the emitted light color when immersed in acetone or methanol for 20 minutes and then irradiated with ultraviolet at 365 nm, was evaluated by visual observation. For Reference Example 1 and Examples 7 and 8 using the red rare-earth complexes 1, 3, 4 which are complex polymers and for Comparative Example 2 using the red light-emitting inorganic oxide, the emitted light color showed no change even after the test. For Reference Example 2 and Comparative Example 1 using the rare-earth complex 2, the comparative red rare-earth complex 1 which are mononuclear complexes, for both acetone and methanol, the emitted light color after the test changed to blue-green.

Table 1

| | Red light-emitting substance | Red (Parts by mass) | Green (Parts by mass) | Blue (Parts by mass) | Emitted light color | Light emission intensity | Light resistance | Emitted light color after light resistance test |
|---|---|---|---|---|---|---|---|---|
| Reference Example 1 | Complex 1 | 70 | 10 | 20 | White | A | A | White |
| Reference Example 2 | Complex 2 | 70 | 10 | 20 | White | A | B | White |
| Example 7 | Complex 3 | 7 | 31 | 62 | White | A | A | White |
| Example 8 | Complex 4 | 10 | 30 | 60 | White | A | A | White |
| Comparative Example 1 | Comparative Complex 1 | 4 | 30 | 66 | White | A | C | Blue-green |
| Comparative Example 2 | Inorganic oxide | 90 | 3.3 | 6.7 | White | C | A | White |
| Reference Example 3 | Complex 1 | 90 | 10 | - | Yellow | A | | Yellow |
| Reference Example 4 | Complex 2 | 90 | 10 | - | Yellow | A | B | Yellow |
| Example 9 | Complex 3 | 30 | 70 | - | Yellow | A | A | Yellow |
| Example 10 | Complex 4 | 40 | 60 | - | Yellow | A | A | Yellow |
| Comparative Example 3 | Comparative Complex 1 | 10 | 90 | - | Yellow | A | C | Green |
| Comparative Example 4 | Inorganic oxide | 98 | 2 | - | Yellow | C | A | Yellow |
| Reference Example 5 | Complex 1 | 20 | - | 80 | Violet | A | A | Violet \| |
| Reference Example 6 | Complex 2 | 20 | - | 80 | Violet | A | B | Violet |
| Example 11 | Complex 3 | 1 | - | 99 | Violet | A | A | Violet |
| Example 12 | Complex 4 | 2 | - | 98 | Violet | A | A | Violet |
| Comparative Example 5 | Comparative Complex 1 | 0.5 | - | 99.5 | Violet | A | c | Blue |
| Comparative Example 6 | Inorganic oxide | 50 | - | 50 | Violet | C | A | Violet |

In Table 1, abbreviations are as follows.

Complex 1: The red rare-earth complex 1 obtained in Synthesis Example 2
Complex 2: The red rare-earth complex 2 obtained in Synthesis Example 3
Complex 3: The red rare-earth complex 3 obtained in Synthesis Example 4
Complex 4: The red rare-earth complex 4 obtained in Synthesis Example 5
Comparative Complex 1: The comparative red rare-earth complex 1 ((Eu(tta)$_3$(Phen) manufactured by Tokyo Chemical Industry Co., Ltd.)
Inorganic oxide: The red light-emitting inorganic oxide (product name: D1124, manufactured by: Nemoto Lumi-Materials Co., Ltd.)

In Reference Examples 1 and 2 and Examples 7 and 8, the rare-earth complex specified in the disclosed

embodiments was used as the red light-emitting substance. Accordingly, for the ink layer, the emitted light color excited at 365 nm was white, and the light emission intensity was high. Accordingly, the printed products obtained in Reference Examples 1 and 2 and Examples 7 and 8 are effective as security printed products with a high anti-counterfeiting effect. Also, the printed products obtained in Reference Examples 1 and 2 and Examples 7 and 8 were excellent in light resistance.

In Comparative Example 1, the rare-earth complex different from the rare-earth complex specified in the disclosed embodiments, was used as the red light-emitting substance. Accordingly, in the light resistance test, the emitted light color after the light irradiation was blue-green and poor in light resistance. It was thought that this is because since the light resistance of the comparative red rare-earth complex 1 was low, a reduction in red light emission occurred.

In Comparative Example 2, the rare-earth complex specified in the disclosed embodiments was not used as the red light-emitting substance. Accordingly, the light emission intensity of the red light-emitting substance was low, and when the mixing ratio was tried to be controlled in order to obtain the same white light emission as Reference Examples 1 and 2 and Examples 7 and 8, the mixing ratio of the red light-emitting substance with low light emission intensity was needed to be increased, and the mixing ratio of the blue and green light-emitting substances decreased. As a result, the white light emission intensity decreased.

In Reference Examples 3 and 4 and Examples 9 and 10, the rare-earth complex specified in the disclosed embodiments was used as the red light-emitting substance. Accordingly, for the ink layer, the emitted light color excited at 365 nm was yellow, and the light emission intensity was high. Accordingly, the printed products obtained in Reference Examples 3 and 4 and Examples 9 and 10 were effective as security printed products with a high anti-counterfeiting effect. Also, the printed products obtained in Reference Examples 3 and 4 and Examples 9 and 10 were excellent in light resistance.

In Comparative Example 3, the rare-earth complex different from the rare-earth complex specified in the disclosed embodiments, was used as the red light-emitting substance. Accordingly, in the light resistance test, the emitted light color after the light irradiation was green and poor in light resistance. It was thought that this is because since the light resistance of the comparative red rare-earth complex 1 was low, a reduction in red light emission occurred.

In Comparative Example 4, the rare-earth complex specified in the disclosed embodiments was not used as the red light-emitting substance. Accordingly, the light emission intensity of the red light-emitting substance was low, and when the mixing ratio was tried to be controlled in order to obtain the same yellow light emission as Reference Example 3, the mixing ratio of the red light-emitting substance with low light emission intensity was needed to be increased, and the mixing ratio of the green light-emitting substance decreased. As a result, the yellow light emission intensity decreased.

In Reference Examples 5 and 6 and Examples 11 and 12, as with the above, the rare-earth complex specified in the disclosed embodiments was used as the red light-emitting substance. Accordingly, for the ink layer, the emitted light color excited at 365 nm was violet, and the light emission intensity was high. Accordingly, the printed products obtained in Reference Examples 5 and 6 and Examples 11 and 12 are effective as security printed products with a high anti-counterfeiting effect. Also, the printed products obtained in Reference Examples 5 and 6 and Examples 11 and 12 were excellent in light resistance.

In Comparative Example 5, the rare-earth complex different from the rare-earth complex specified in the disclosed embodiments, was used as the red light-emitting substance. Accordingly, in the light resistance test, the emitted light color after the light irradiation was blue and poor in light resistance. It was thought that this is because since the light resistance of the comparative red rare-earth complex 1 was low, a reduction in red light emission occurred.

In Comparative Example 6, the rare-earth complex specified in the disclosed embodiments was not used as the red light-emitting substance. Accordingly, the light emission intensity of the red light-emitting substance was low, and when the mixing ratio was tried to be controlled in order to obtain the same violet light emission as Reference Example 5, the mixing ratio of the red light-emitting substance with low light emission intensity was needed to be increased, and the mixing ratio of the blue light-emitting substance decreased. As a result, the violet light emission intensity decreased.

As shown in the excitation spectra of the single color light-emitting ink layers of the red rare-earth complexes of FIGS. 27 to 30, the red rare-earth complexes 3 and 4 containing the ligand represented by the general formula (4-1) and the ligand represented by the general formula (4-2), are high in sensitivity to 350 to 400 nm compared to the red rare-earth complexes 1 and 2. When excited by ultraviolet at 350 to 400 nm, as shown in the light emission spectra of the single color light-emitting ink layers of the red rare-earth complexes of FIGS. 21 to 24, the red rare-earth complexes 3 and 4 can emit stronger light, and when mixed to prepare a neutral-colored light-emitting ink, the amount of the red light-emitting substance used can be reduced. In Examples 7, 8, 9, 10, 11 and 12 containing the ligand represented by the general formula (4-1) and the ligand represented by the general formula (4-2), it is indicated that when mixed to prepare a neutral-colored light-emitting ink, the amount of the red light-emitting substance used can be reduced (Table 1).

Reference Signs List

1. Printed product
10. Substrate
11. Ink layer

## Claims

**1.** An ink composition comprising:

a rare-earth complex containing one kind of trivalent rare-earth ion selected from the group consisting of $Eu^{3+}$, $Tb^{3+}$, $Sm^{3+}$, $Er^{3+}$, $Pr^{3+}$, $Ho^{3+}$, $Tm^{3+}$ and $Dy^{3+}$, and a phosphine oxide ligand represented by the following general formula (1) and coordinated to the rare-earth ion, and
a light-emitting material different from the rare-earth complex,
wherein an absolute value of a difference between a wavelength ($\lambda$1) at which a light emission intensity of the rare-earth complex is maximum and a wavelength ($\lambda$2) at which a light emission intensity of the light-emitting material is maximum, is 50 nm or more,
wherein the phosphine oxide ligand is a bidentate ligand,
wherein the rare-earth complex is a rare-earth complex polymer and contains a linked structure formed by coordinating the phosphine oxide ligand to two of the rare-earth ions, and
wherein the rare-earth complex further contains a ligand represented by the following general formula (4-1) and a ligand represented by the following general formula (4-2):

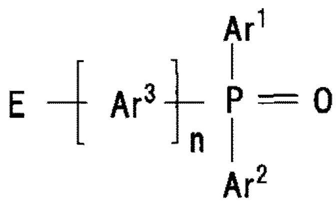
(1)

in the general formula (1), $Ar^1$ and $Ar^2$ are each independently an aromatic group optionally containing a substituent group; $Ar^3$ is a divalent group represented by the following general formula (2a), (2b) or (2c); and n is 1 or 2:

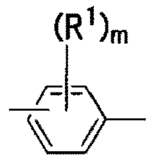
(2a)

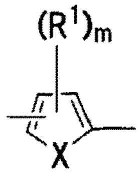
(2b)

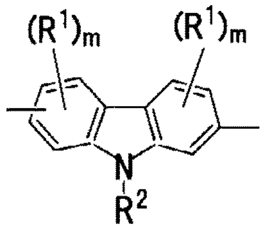

(2c)

in the general formulae (2a) to (2c), $R^1$ is each independently a monovalent substituent group; X is a sulfur atom or an oxygen atom; $R^2$ is a hydrogen atom or a hydrocarbon group; m is an integer of from 0 to a number of substitutable sites of a ring to which $R^1$ is bound; and when there are a plurality of $R^1$s, they are optionally the same or different, and

in the general formula (1), E is a phosphine oxide group represented by the following general formula (3):

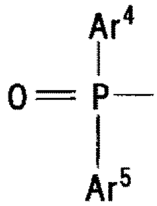

(3)

in the general formula (3), $Ar^4$ and $Ar^5$ are each independently an aromatic group optionally containing a substituent group; $Ar^1$ and $Ar^4$ are optionally bound to each other directly or via a linking group; and $Ar^2$ and $Ar^5$ are optionally bound to each other directly or via a linking group, and

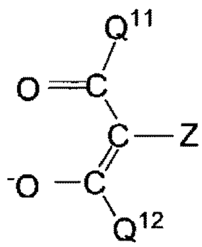

(4-1)

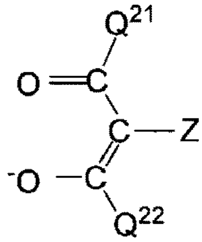

(4-2)

in the general formulae (4-1) and (4-2), $Q^{11}$ and $Q^{12}$ are each independently an aliphatic hydrocarbon group optionally containing a substituent group; $Q^{21}$ is an aliphatic hydrocarbon group optionally containing a substituent group; $Q^{22}$ is an aromatic hydrocarbon group optionally containing a substituent group or an aromatic heterocyclic group optionally containing a substituent group; and Z is a hydrogen atom or a deuterium atom.

2. The ink composition according to Claim 1, wherein an emitted light color is white.

3. The ink composition according to Claim 1 or 2, wherein the content ratio of the ligand represented by the general formula (4-2) is 10 mol or more and 99 mol or less with respect to the total content (100 mol) of the ligand represented by the general formula (4-1) and the ligand represented by the general formula (4-2).

4. A printed product comprising an ink layer containing a solidified product of the ink composition defined by any one of Claims 1 to 3.

## Patentansprüche

**1.** Tintenzusammensetzung, umfassend:

einen Seltene-Erden-Komplex, der eine Art von dreiwertigem Seltene-Erden-Ion, das aus der Gruppe ausgewählt ist, die aus $Eu^{3+}$, $Tb^{3+}$, $Sm^{3+}$, $Er^{3+}$, $Pr^{3+}$, $Ho^{3+}$, $Tm^{3+}$ und $Dy^{3+}$ besteht, und einen Phosphinoxid-Liganden, der durch die nachstehende allgemeine Formel (1) dargestellt wird und an das Seltene-Erden-Ion koordiniert ist, enthält, und
ein lichtemittierendes Material, das sich von dem Seltene-Erden-Komplex unterscheidet,
wobei ein absoluter Wert einer Differenz zwischen einer Wellenlänge ($\lambda 1$), bei der eine Lichtemissionsintensität des Seltene-Erden-Komplexes maximal ist, und einer Wellenlänge ($\lambda 2$), bei der eine Lichtemissionsintensität des lichtemittierenden Materials maximal ist, 50 nm oder mehr beträgt,
wobei der Phosphinoxid-Ligand ein zweizähniger Ligand ist,
wobei der Seltene-Erden-Komplex ein Seltene-Erden-Komplexpolymer ist und eine verknüpfte Struktur enthält, die durch Koordinierung des Phosphinoxid-Liganden an zwei der Seltene-Erden-Ionen gebildet wird, und
wobei der Seltene-Erden-Komplex weiter einen Liganden, der durch die nachstehende allgemeine Formel (4-1) dargestellt wird, und einen Liganden, der durch die nachstehende allgemeine Formel (4-2) dargestellt wird, enthält:

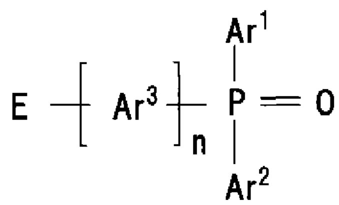

(1)

in der allgemeinen Formel (1) sind $Ar^1$ und $Ar^2$ jeweils unabhängig voneinander eine aromatische Gruppe, die gegebenenfalls eine Substituentengruppe enthält; $Ar^3$ ist eine zweiwertige Gruppe, die durch die nachstehende allgemeine Formel (2a), (2b) oder (2c) dargestellt wird; und n ist 1 oder 2:

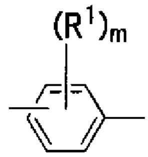

(2a)

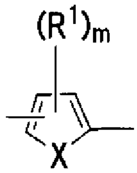

(2b)

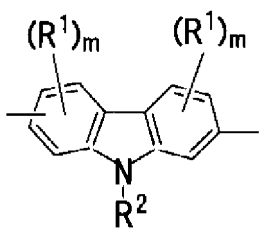

(2c)

in den allgemeinen Formeln (2a) bis (2c) ist $R^1$ jeweils unabhängig eine einwertige Substituentengruppe; X ist ein Schwefelatom oder ein Sauerstoffatom; $R^2$ ist ein Wasserstoffatom oder eine Kohlenwasserstoffgruppe; m ist eine ganze Zahl von 0 bis zu einer Anzahl substituierbarer Stellen eines Rings, an den $R^1$ gebunden ist; und wenn es mehrere $R^1$ gibt, sind sie gegebenenfalls gleich oder verschieden, und

in der allgemeinen Formel (1) ist E eine Phosphinoxidgruppe, die durch die nachstehende allgemeine Formel (3) dargestellt wird:

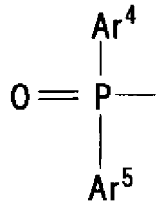

(3)

in der allgemeinen Formel (3) sind $Ar^4$ und $Ar^5$ jeweils unabhängig voneinander eine aromatische Gruppe, die gegebenenfalls eine Substituentengruppe enthält; $Ar^1$ und $Ar^4$ sind gegebenenfalls direkt oder über eine verbindende Gruppe aneinander gebunden; und $Ar^2$ und $Ar^5$ sind gegebenenfalls direkt oder über eine verbindende Gruppe aneinander gebunden, und

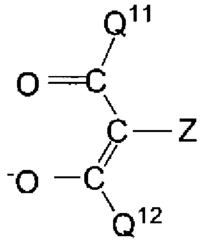

(4-1)

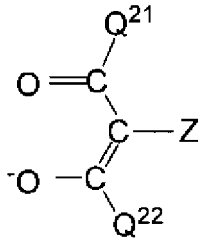

(4-2)

in den allgemeinen Formeln (4-1) und (4-2) sind $Q^{11}$ und $Q^{12}$ jeweils unabhängig voneinander eine aliphatische Kohlenwasserstoffgruppe, die gegebenenfalls eine Substituentengruppe enthält; $Q^{21}$ ist eine aliphatische Kohlenwasserstoffgruppe, die gegebenenfalls eine Substituentengruppe enthält; $Q^{22}$ ist eine aromatische Kohlenwasserstoffgruppe, die gegebenenfalls eine Substituentengruppe enthält, oder eine aromatische heterocyclische Gruppe, die gegebenenfalls eine Substituentengruppe enthält; und Z ist ein Wasserstoffatom oder ein Deuteriumatom.

2. Tintenzusammensetzung nach Anspruch 1, wobei eine emittierte Lichtfarbe Weiß ist.

3. Tintenzusammensetzung nach Anspruch 1 oder 2, wobei das Gehaltsverhältnis des durch die allgemeine Formel (4-2) dargestellten Liganden 10 mol oder mehr und 99 mol oder weniger beträgt, bezogen auf den Gesamtgehalt (100 mol) des durch die allgemeine Formel (4-1) dargestellten Liganden und des durch die allgemeine Formel (4-2) dargestellten Liganden,

4. Druckerzeugnis, umfassend eine Tintenschicht, die ein verfestigtes Produkt der durch einen der Ansprüche 1 bis 3 definierten Tintenzusammensetzung enthält.

## Revendications

1. Composition d'encre comprenant :

un complexe de terres rares contenant un type d'ion de terres rares trivalent sélectionné parmi le groupe constitué de $Eu^{3+}$, $Tb^{3+}$, $Sm^{3+}$, $Er^{3+}$, $Pr^{3+}$, $Ho^{3+}$, $Tm^{3+}$et $Dy^{3+}$, et un ligand d'oxyde de phosphine représenté

par la formule générale suivante (1) et coordonné à l'ion de terres rares, et
un matériau à émission lumineuse différent du complexe de terres rares,
dans laquelle une valeur absolue d'une différence entre une longueur d'onde (λ1) à laquelle une intensité d'émission lumineuse du complexe de terres rares est maximale et une longueur d'onde (λ2) à laquelle une intensité d'émission lumineuse du matériau à émission lumineuse est maximale est de 50 nm ou plus, dans laquelle le ligand d'oxyde de phosphine est un ligand bidenté,
dans laquelle le complexe de terres rares est un polymère de complexe de terres rares et contient une structure liée formée en coordonnant le ligand d'oxyde de phosphine à deux des ions de terres rares, et
dans laquelle le complexe de terres rares contient en outre un ligand représenté par la formule générale suivante (4-1) et un ligand représenté par la formule générale suivante (4-2) :

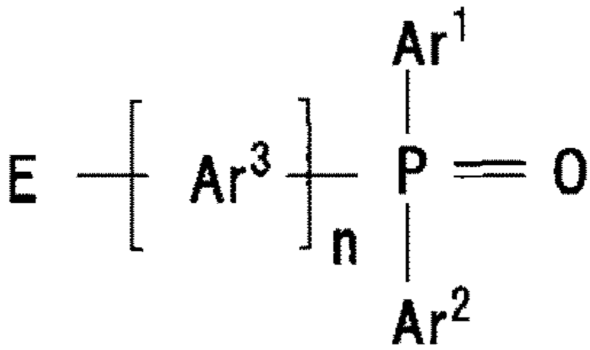

(1)

dans la formule générale (1), $Ar^1$ et $Ar^2$ sont chacun indépendamment un groupe aromatique contenant en option un groupe substituant ; $Ar^3$ est un groupe divalent représenté par la formule générale suivante (2a), (2b) ou (2c) ; et n est 1 ou 2 :

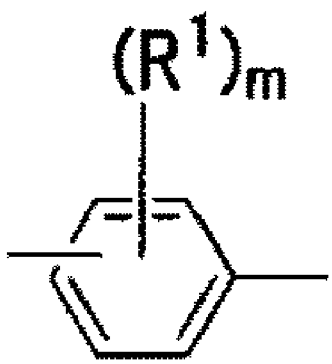

(2a)

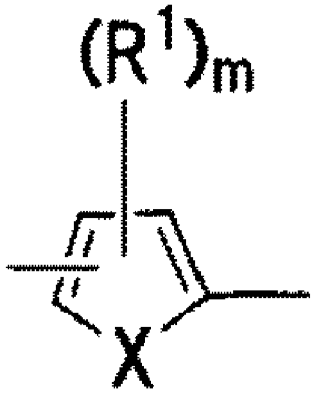

(2b)

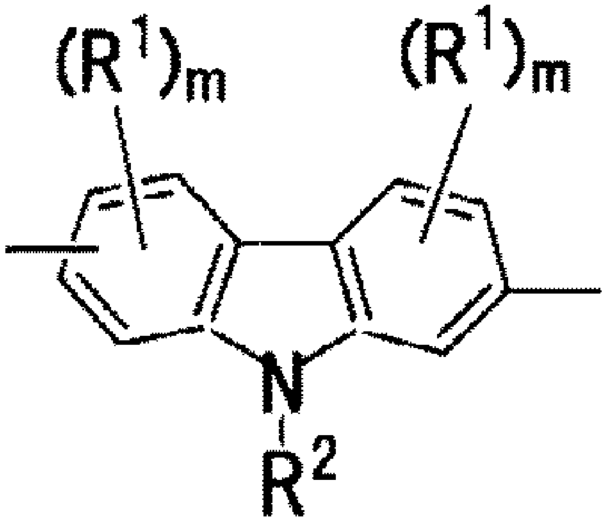

(2c)

dans les formules générales (2a) à (2c), $R^1$ est chacun indépendamment un groupe substituant monovalent ; X est un atome de soufre ou un atome d'oxygène ; $R^2$ est un atome d'hydrogène ou un groupe hydrocarbure ; m est un entier allant de 0 à un nombre de sites pouvant être substitués d'un anneau auquel $R^1$ est lié ; et lorsqu'il y a une pluralité de $R^1$, ils sont en option identiques ou différents, et
dans la formule générale (1), E est un groupe d'oxyde de phosphine représenté par la formule générale suivante (3) :

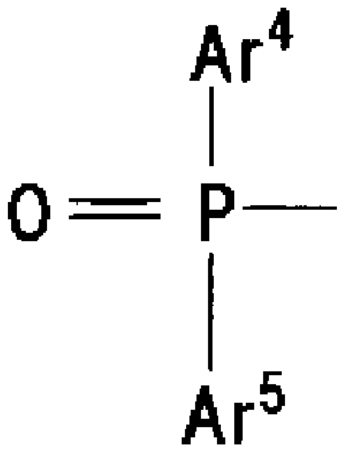

(3)

dans la formule générale (3), $Ar^4$ et $Ar^5$ sont chacun indépendamment un groupe aromatique contenant en option un groupe substituant ; $Ar^1$ et $Ar^4$ sont liés en option l'un à l'autre directement ou par le biais d'un groupe de liaison ; et $Ar^2$ et $Ar^5$ sont liés en option l'un à l'autre directement ou par le biais d'un groupe de liaison, et

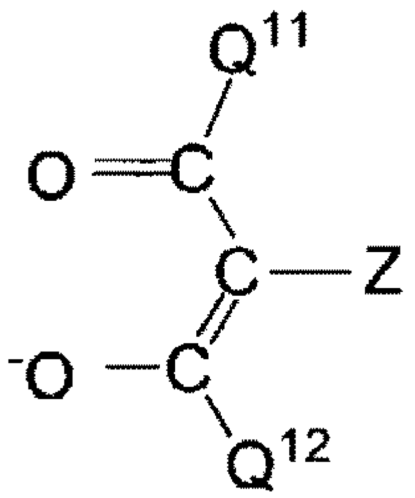

(4-1)

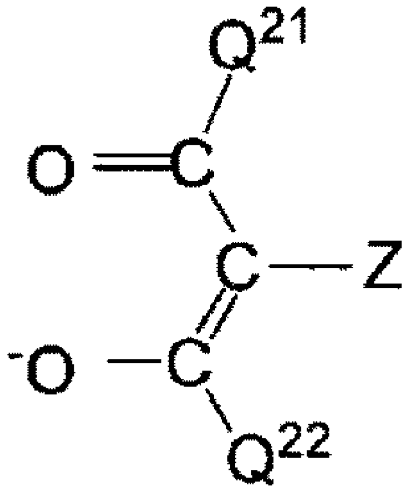

(4-2)

dans les formules générales (4-1) et (4-2), $Q^{11}$ et $Q^{12}$ sont chacun indépendamment un groupe hydrocarbure aliphatique contenant en option un groupe substituant ; $Q^{21}$ est un groupe hydrocarbure aliphatique contenant en option un groupe substituant ; $Q^{22}$ est un groupe hydrocarbure aromatique contenant un groupe substituant ou un groupe hétérocyclique aromatique contenant en option un groupe substituant ; et Z est un atome d'hydrogène ou un atome de deutérium.

**2.** Composition d'encre selon la revendication 1, dans laquelle une couleur lumineuse émise est blanche,

**3.** Composition d'encre selon la revendication 1 ou 2, dans laquelle le rapport de teneur du ligand représenté par la formule générale (4-2) est de 10 moles ou plus et 99 moles ou moins par rapport à la teneur totale (100 moles) du ligand représenté par la formule générale (4-1) et du ligand représenté par la formule générale (4-2).

**4.** Produit imprimé comprenant une couche d'encre contenant un produit solidifié de la composition d'encre définie par l'une quelconque des revendications 1 à 3.

FIG. 1

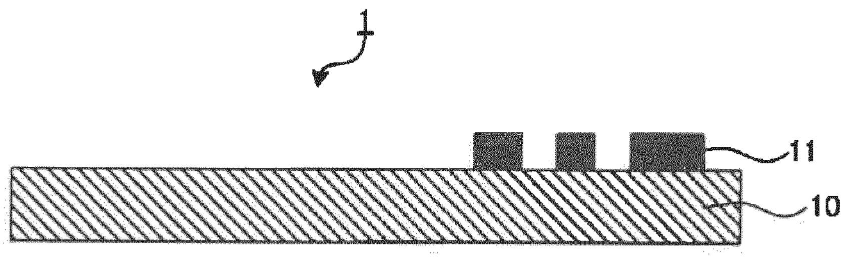


FIG. 2

<Light emission spectrum of white light-emitting ink layer of printed product of Example 1>

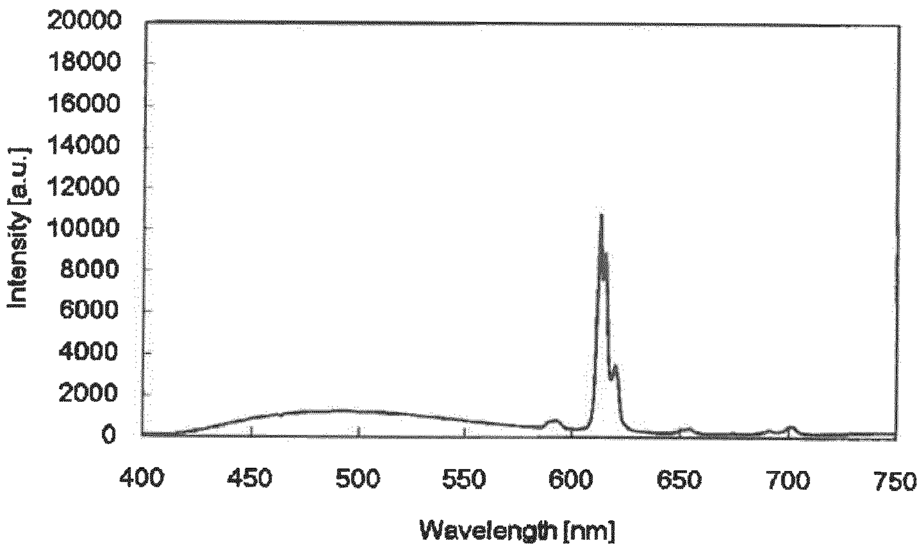

FIG. 3

<Light emission spectrum of white light-emitting ink layer of printed product of Example 2>

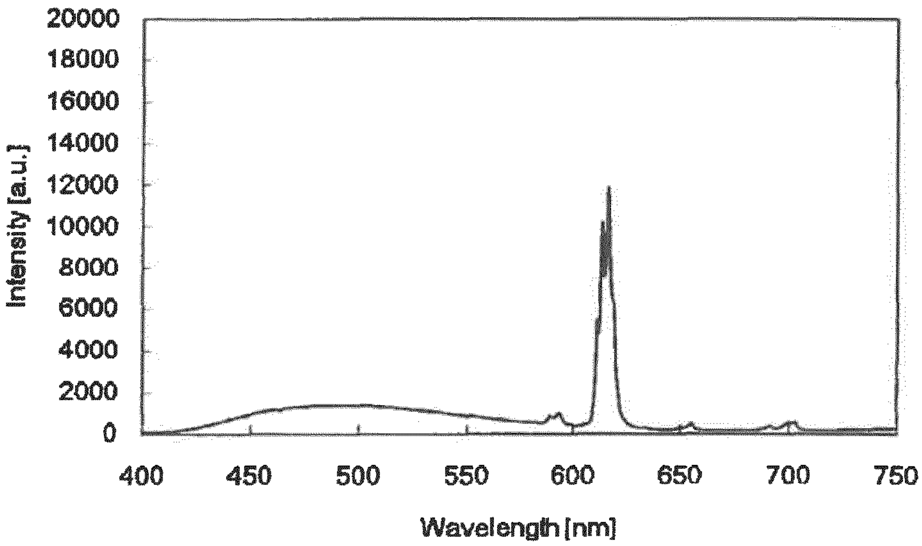


FIG. 4

<Light emission spectrum of white light-emitting ink layer of printed product of Example 7>

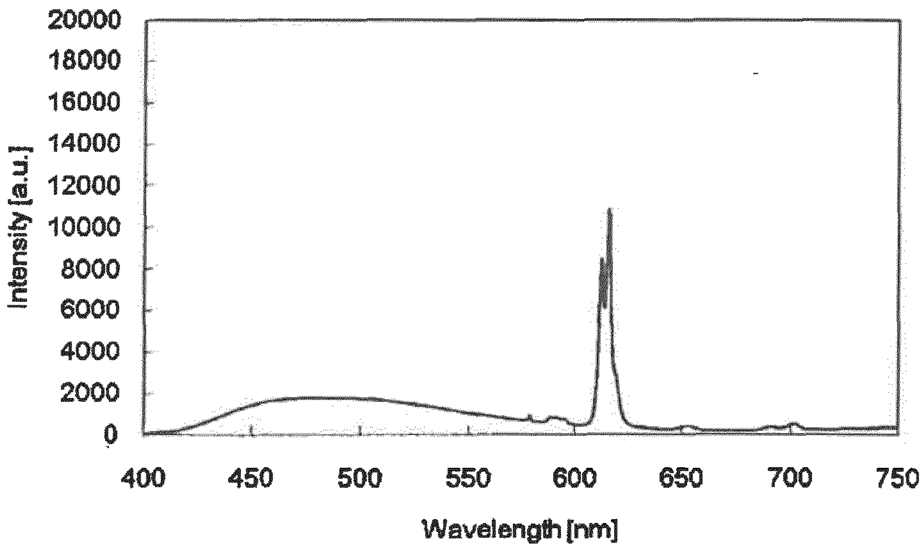

FIG. 5

<Light emission spectrum of white light-emitting ink layer of printed product of Example 8>

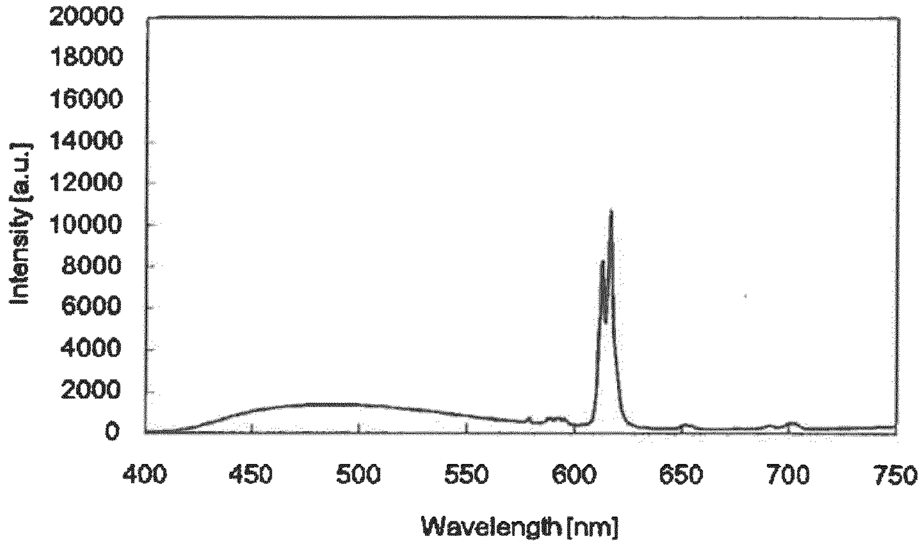


FIG. 6

<Light emission spectrum of white light-emitting ink layer of printed product of Comparative Example 1>

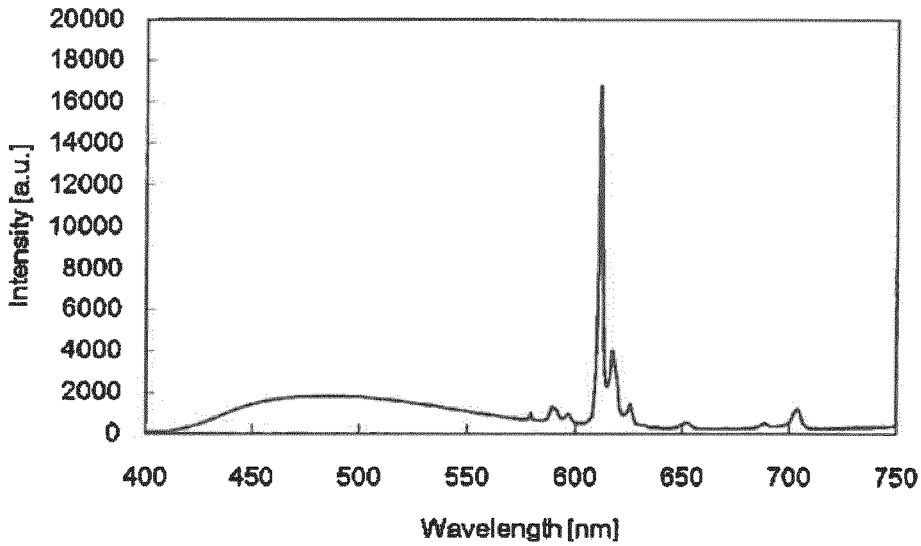

FIG. 7

<Light emission spectrum of white light-emitting ink layer of printed product of Comparative Example 2>

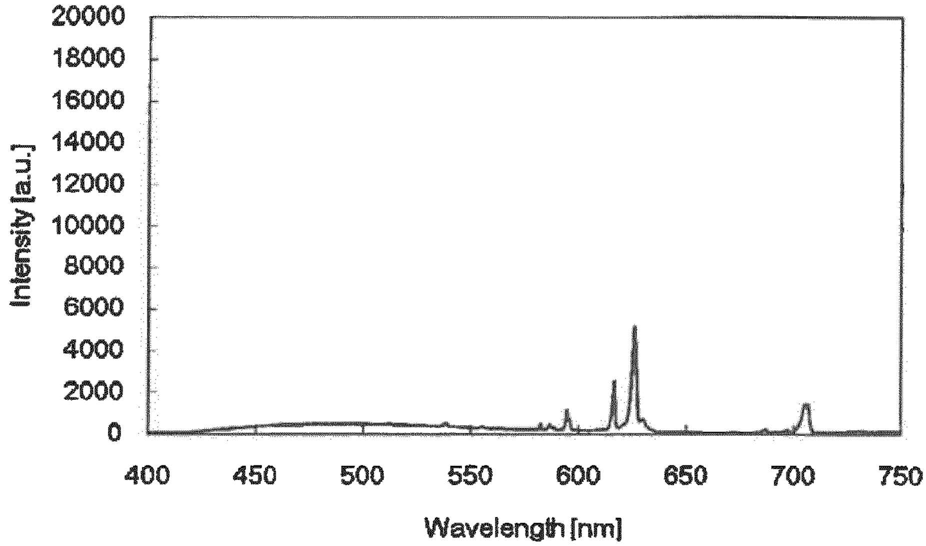


FIG. 8

<Light emission spectrum of yellow light-emitting ink layer of printed product of Example 3>

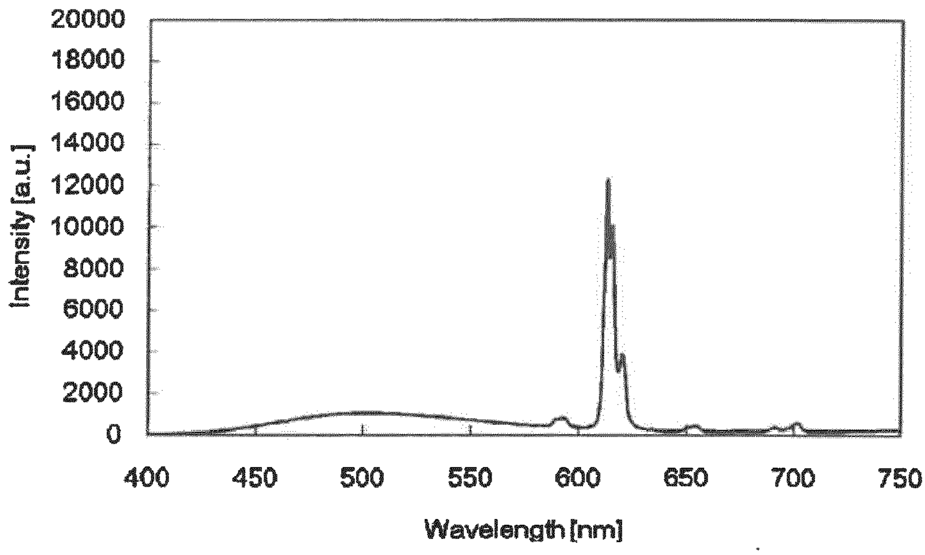

FIG. 9

<Light emission spectrum of yellow light-emitting ink layer of printed product of Example 4>

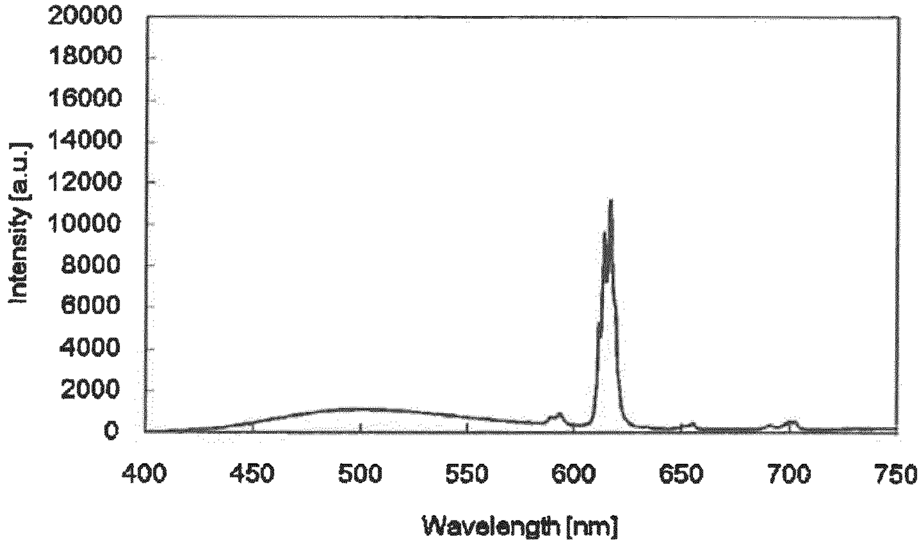


FIG. 10

<Light emission spectrum of yellow light-emitting ink layer of printed product of Example 9>

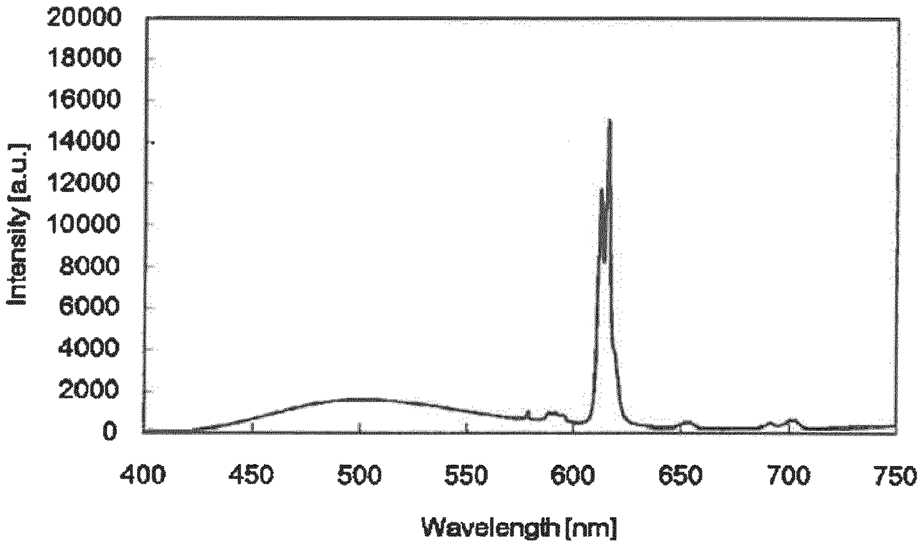

FIG. 11

<Light emission spectrum of yellow light-emitting ink layer of printed product of Example 10>

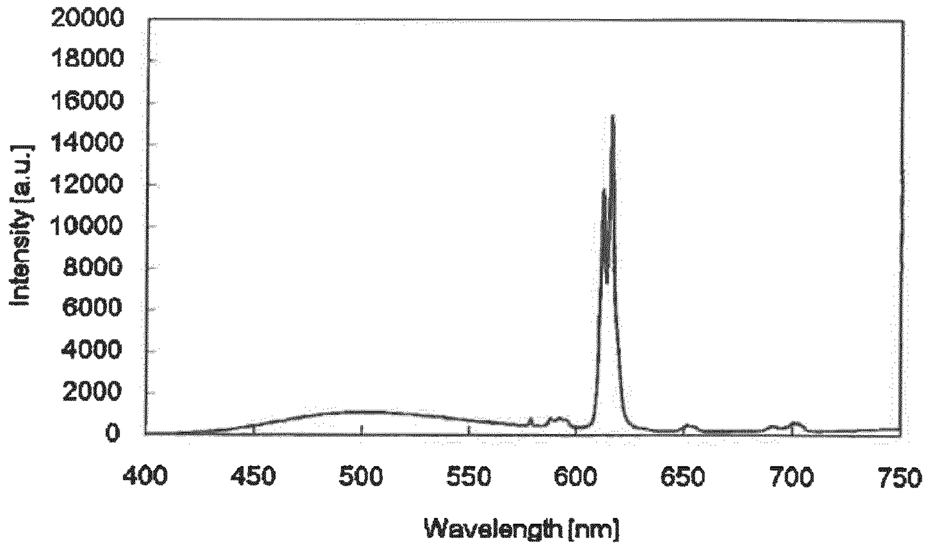


FIG. 12

<Light emission spectrum of yellow light-emitting ink layer of printed product of Comparative Example 3>

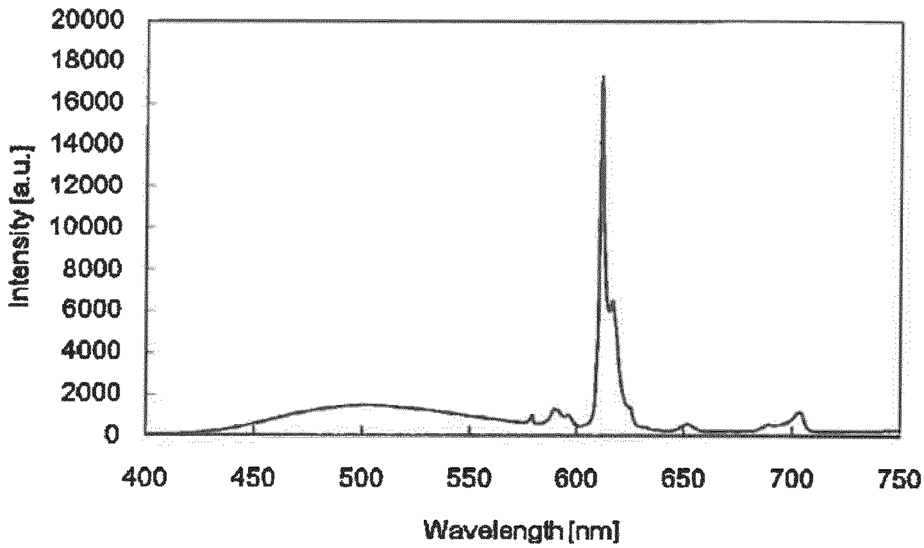

FIG. 13

<Light emission spectrum of yellow light-emitting ink layer of printed product of Comparative Example 4>

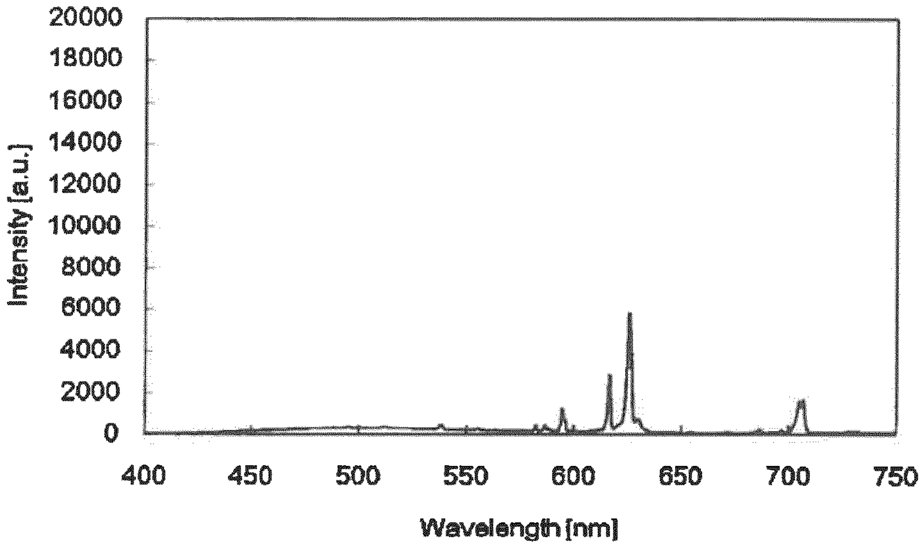


FIG. 14

<Light emission spectrum of violet light-emitting ink layer of printed product of Example 5>

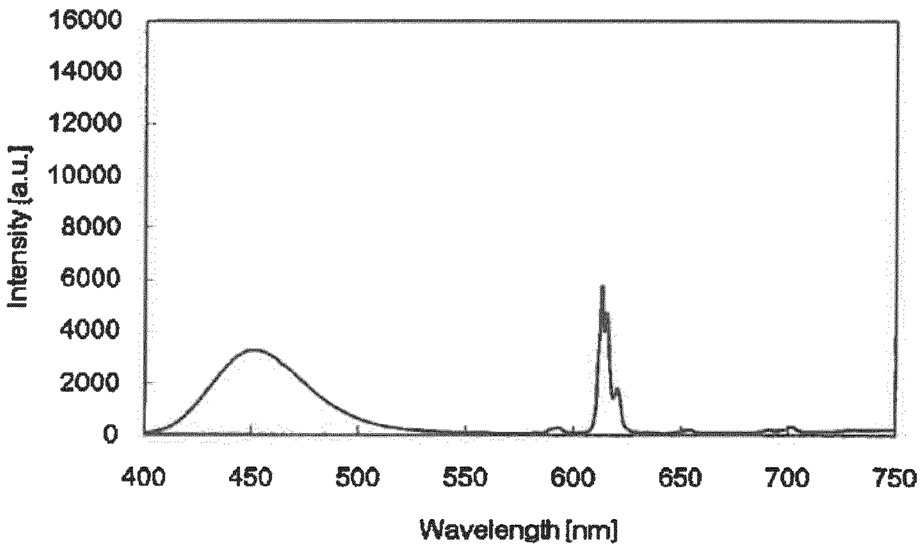

FIG. 15

<Light emission spectrum of violet light-emitting ink layer of printed product of Example 6>

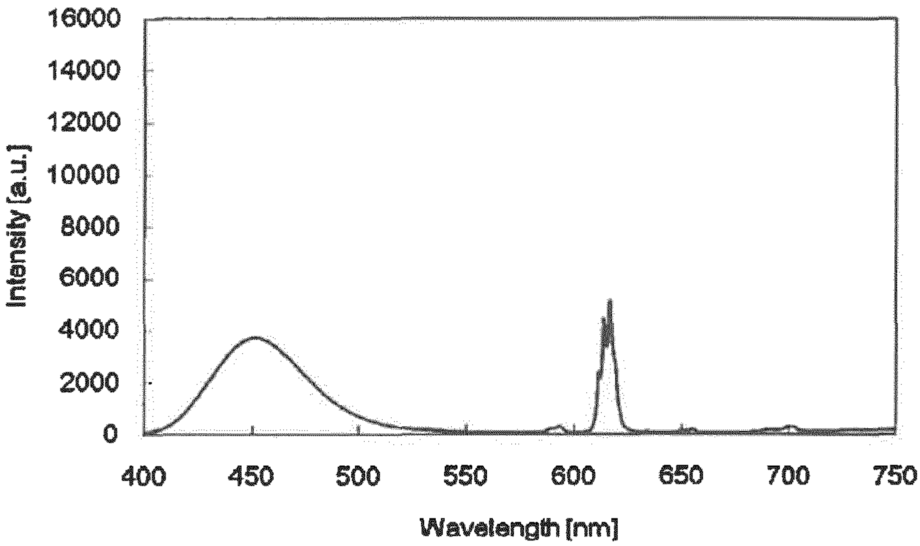


FIG. 16

<Light emission spectrum of violet light-emitting ink layer of printed product of Example 11>

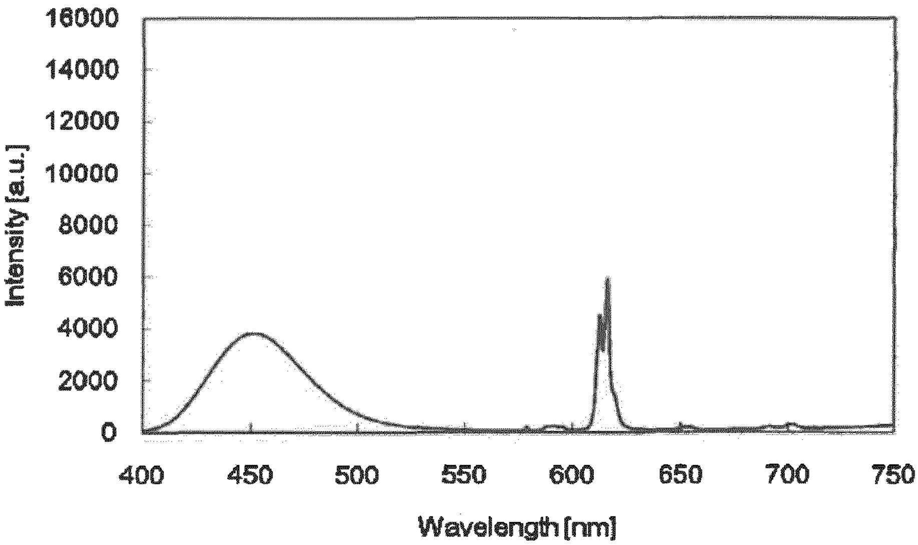

FIG. 17

<Light emission spectrum of violet light-emitting ink layer of printed product of Example 12>

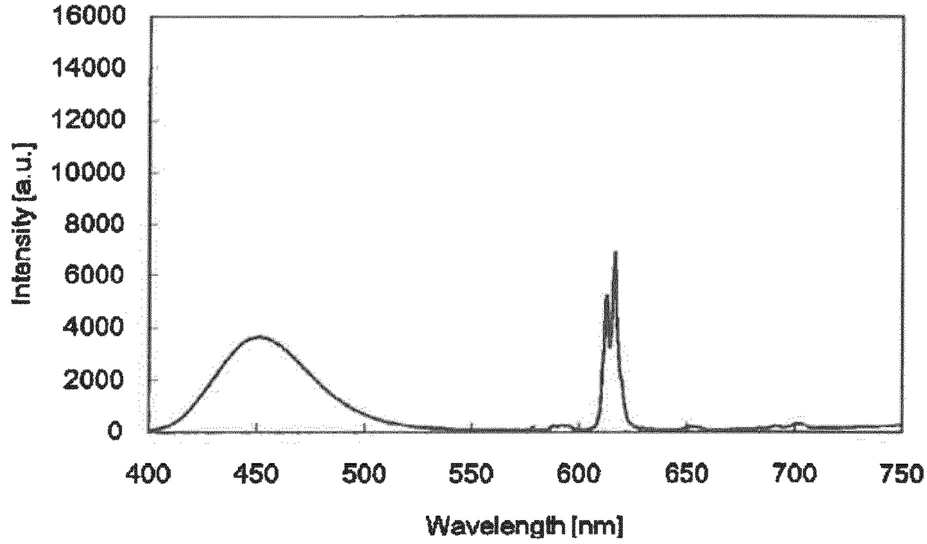


FIG. 18

<Light emission spectrum of violet light-emitting ink layer of printed product of Comparative Example 5>

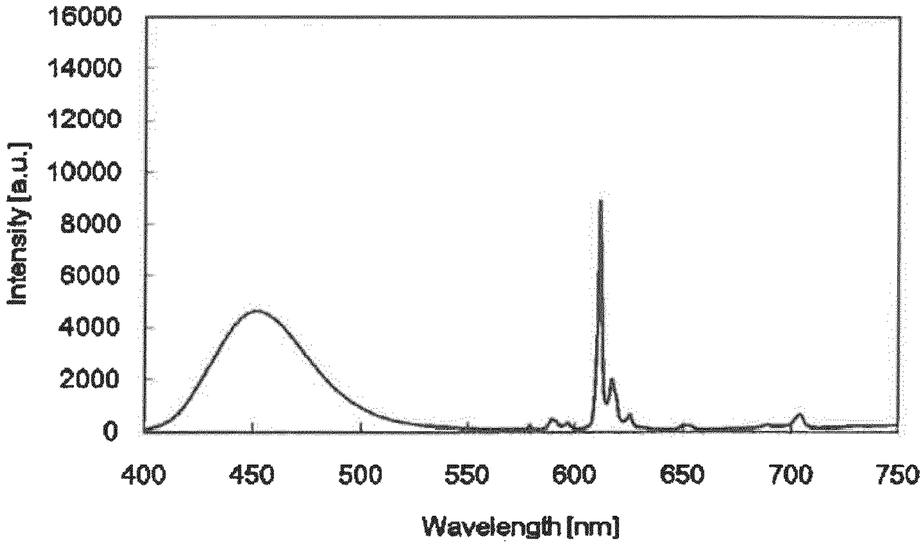

FIG. 19

<Light emission spectrum of violet light-emitting ink layer of printed product of Comparative Example 6>

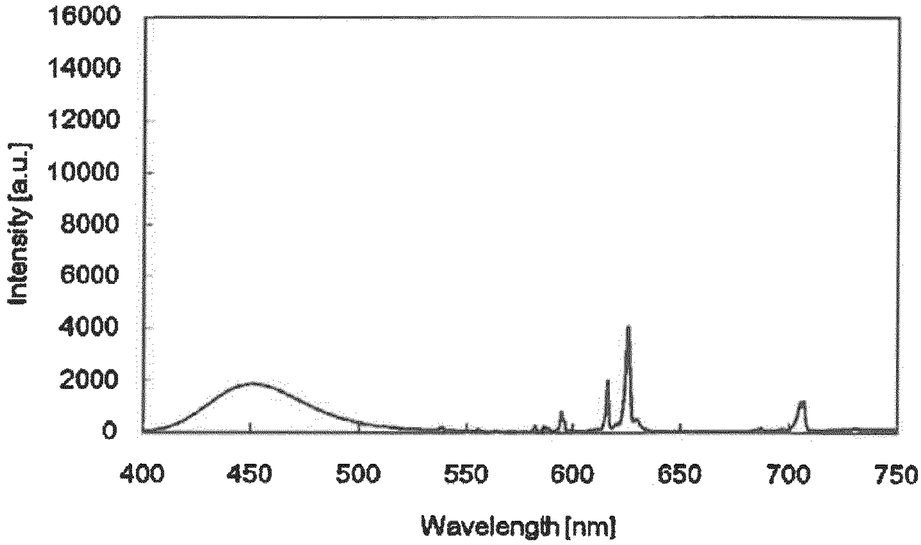


FIG. 20

<Light emission spectrum of standard sample>

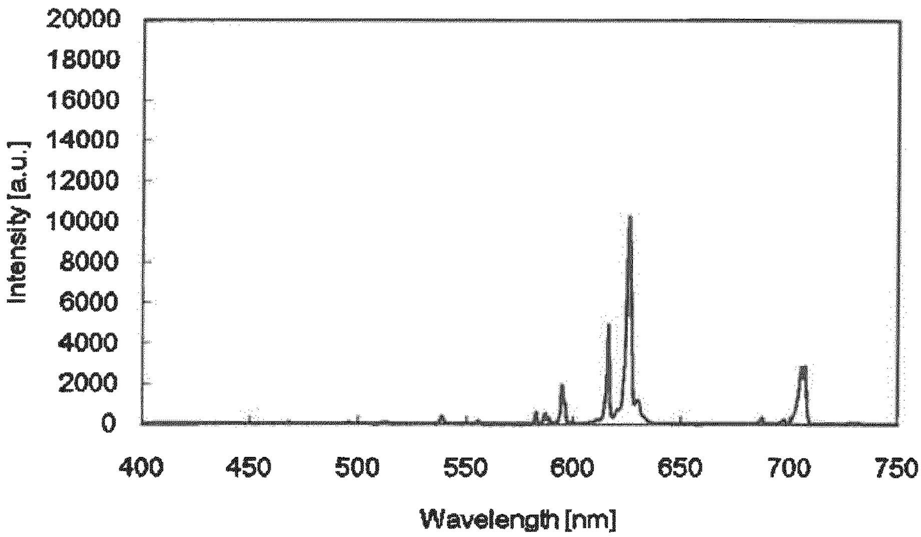

FIG. 21

<Light emission spectrum of single color light-emitting ink layer of red rare-earth complex 1>

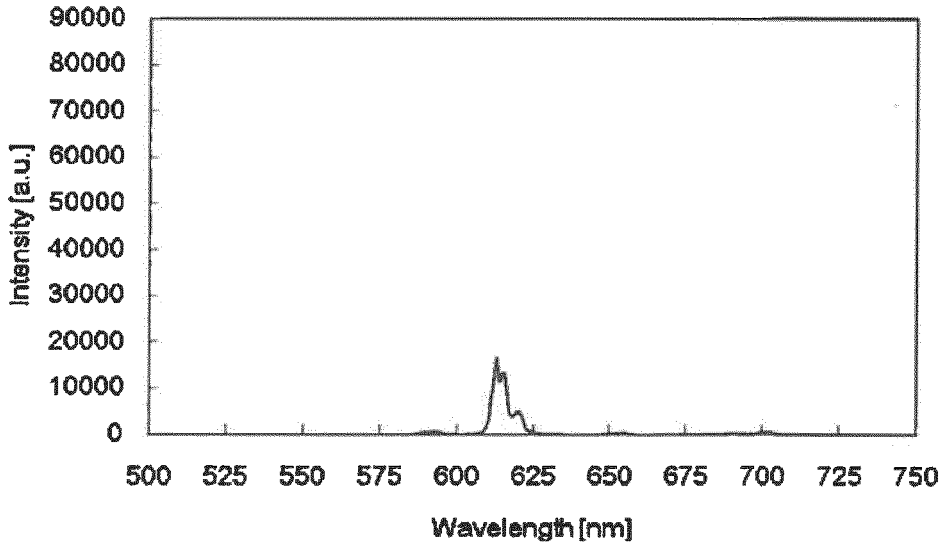


FIG. 22

<Light emission spectrum of single color light-emitting ink layer of red rare-earth complex 2>

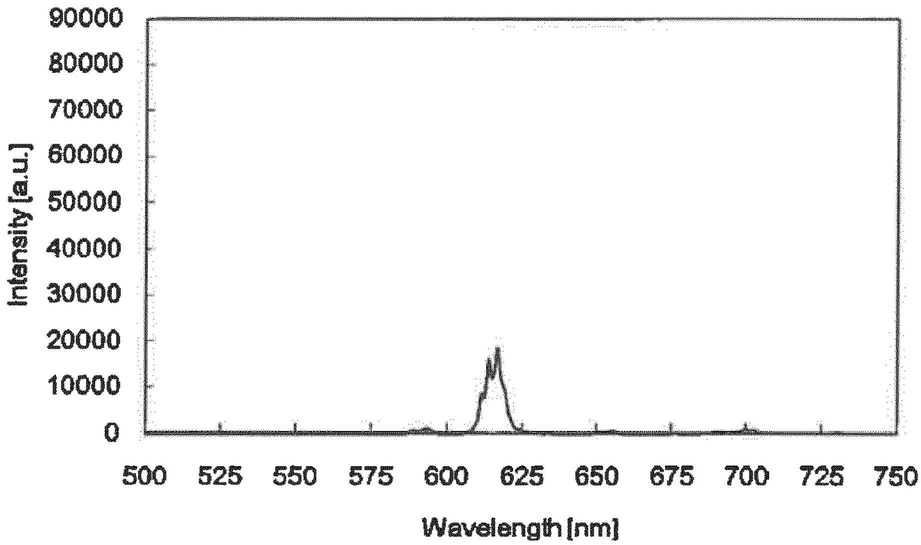

FIG. 23

<Light emission spectrum of single color light-emitting ink layer of red rare-earth complex 3>

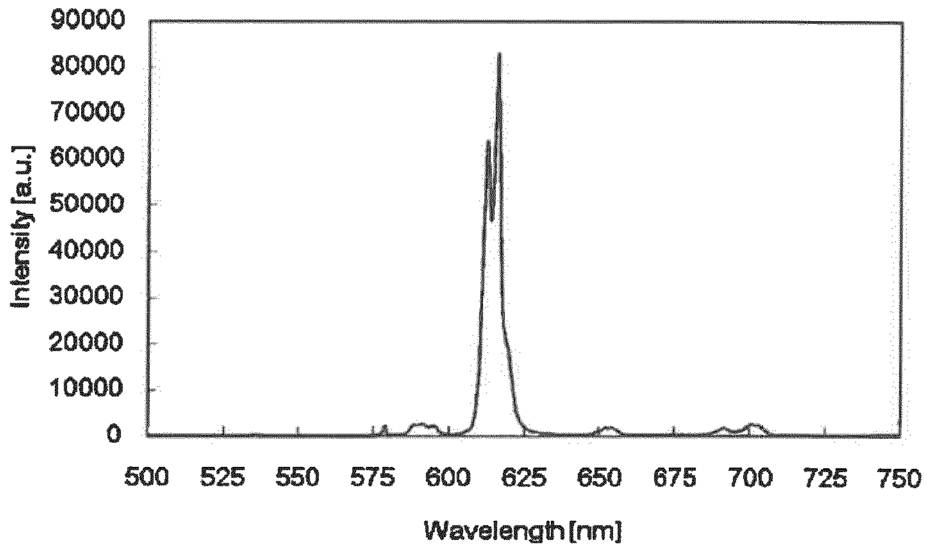


FIG. 24

<Light emission spectrum of single color light-emitting ink layer of red rare-earth complex 4>

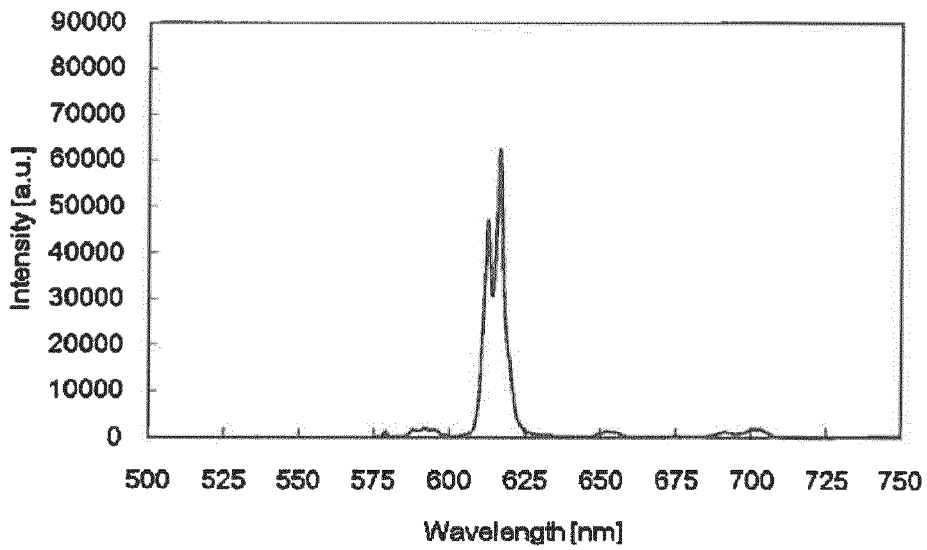

FIG. 25

<Light emission spectrum of single color light-emitting ink layer of comparative red rare-earth complex 1>

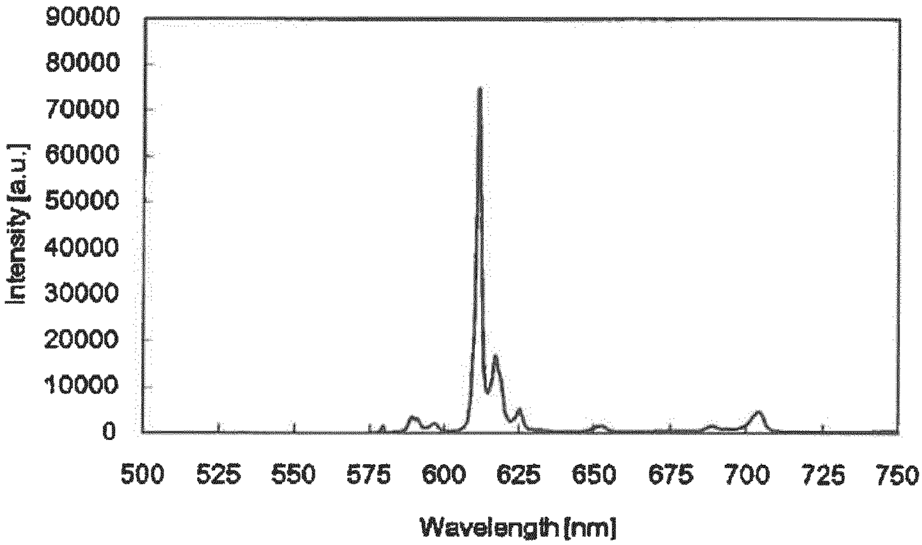


FIG. 26

<Light emission spectrum of single color light-emitting ink layer of comparative red light-emitting inorganic oxide>

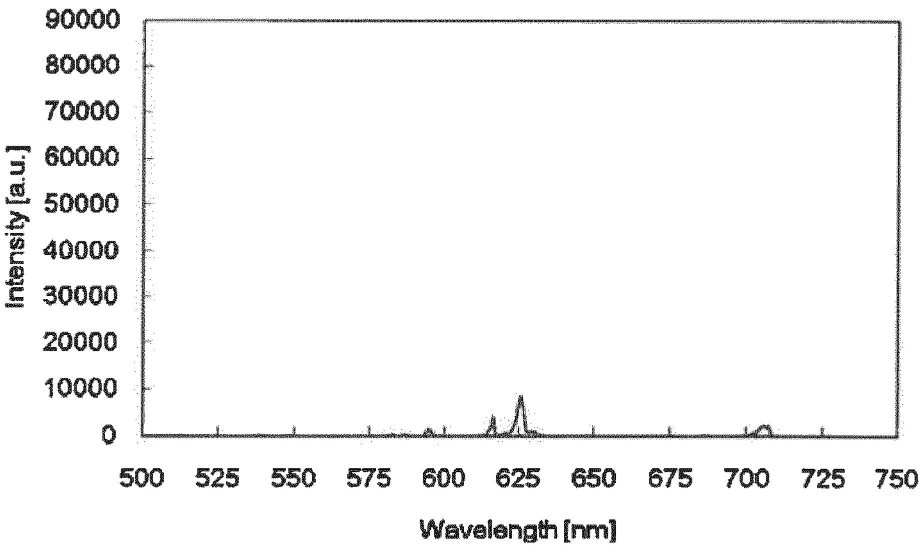

FIG. 27

<Excitation spectrum of single color light-emitting ink layer of red rare-earth complex 1>
(Detection wavelength: 613 nm, Maximum excitation wavelength: 347 nm)

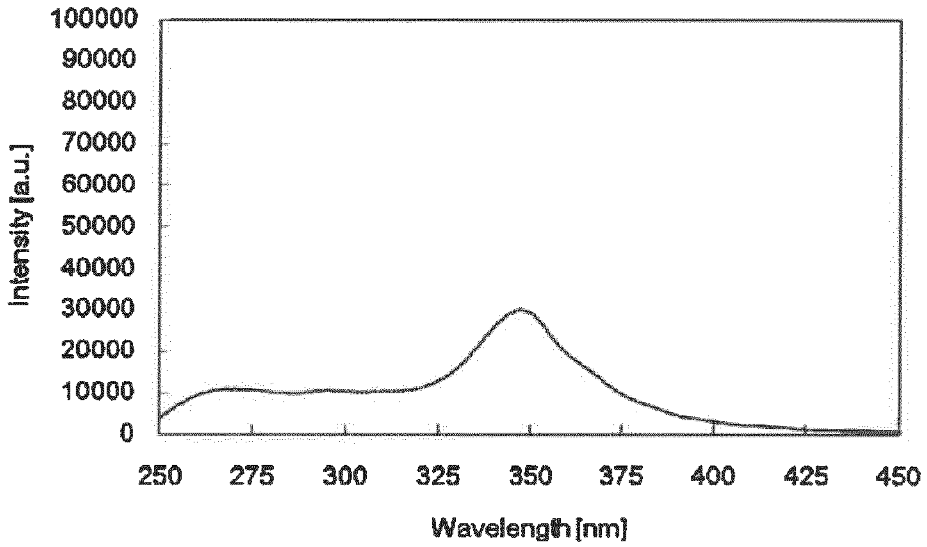


FIG. 28

<Excitation spectrum of single color light-emitting ink layer of red rare-earth complex 2>
(Detection wavelength: 617 nm, Maximum excitation wavelength: 347 nm)

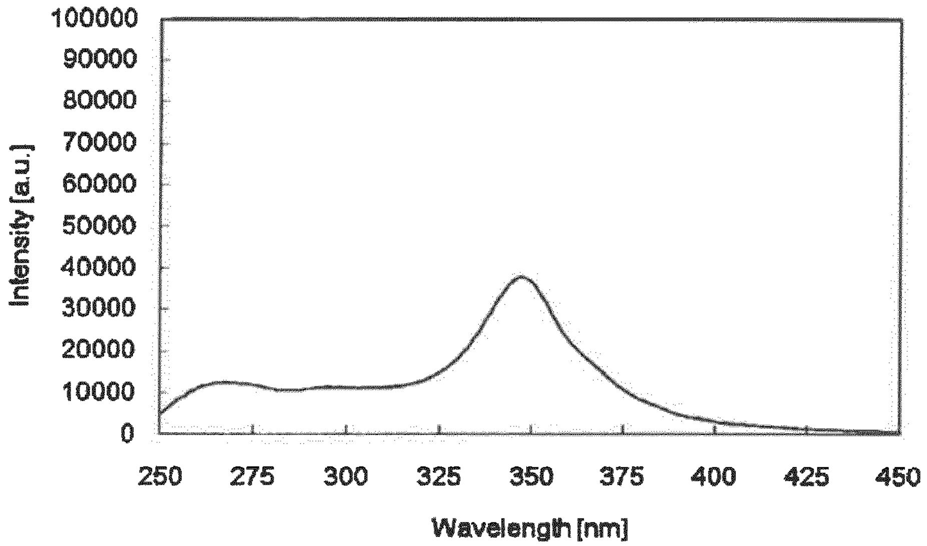

FIG. 29

<Excitation spectrum of single color light-emitting ink layer of red rare-earth complex 3>
(Detection wavelength: 616 nm, Maximum excitation wavelength: 383 nm)

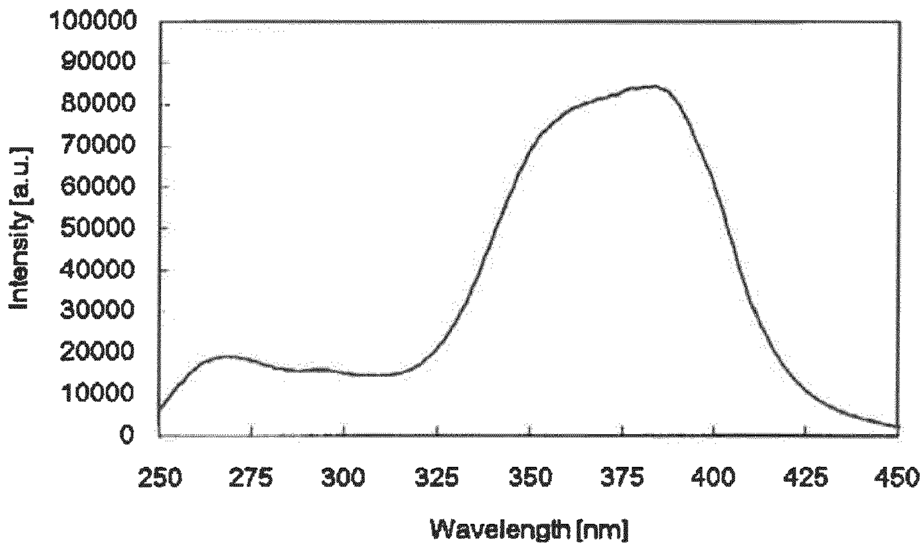


FIG. 30

<Excitation spectrum of single color light-emitting ink layer of red rare-earth complex 4>
(Detection wavelength: 617 nm, Maximum excitation wavelength: 368 nm)

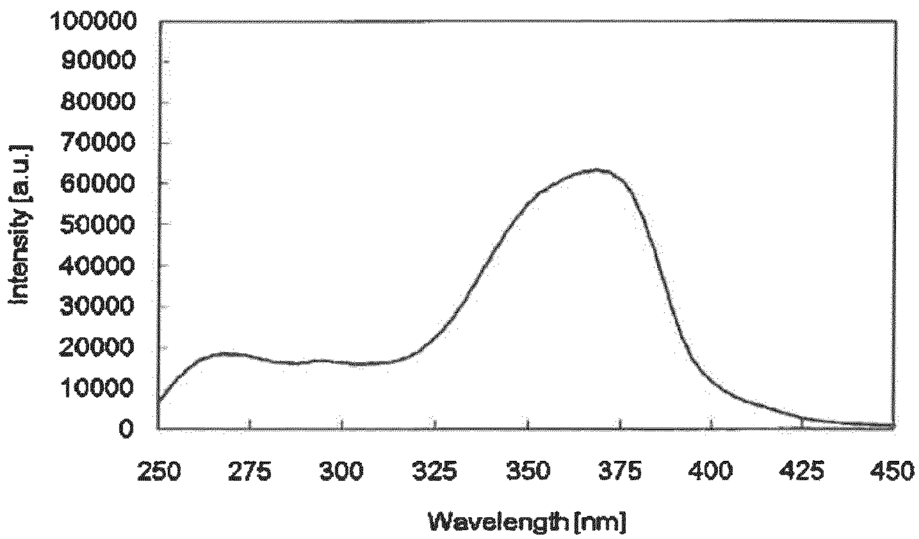

FIG. 31

<Excitation spectrum of single color light-emitting ink layer of comparative red rare-earth complex 1>
(Detection wavelength: 612 nm, Maximum excitation wavelength: 387 nm)

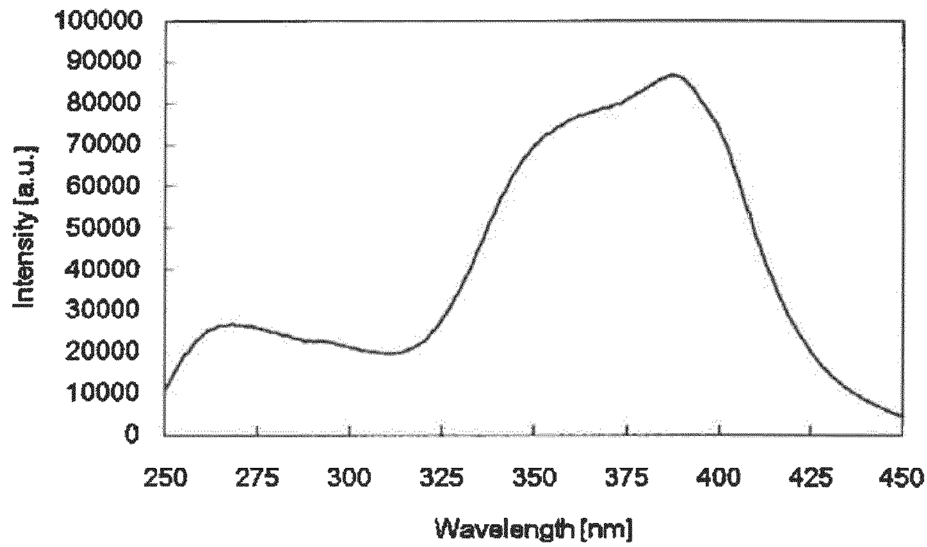


FIG. 32

<Excitation spectrum of single color light-emitting ink layer of comparative red light-emitting inorganic oxide>
(Detection wavelength: 612 nm, Maximum excitation wavelength: 356 nm)

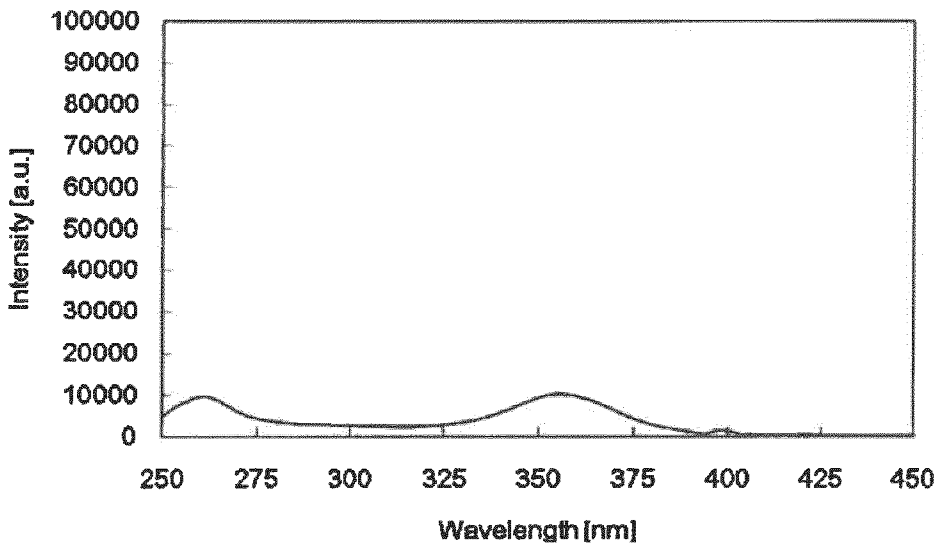

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06278396 A
- JP H06297888 A
- WO 2012150712 A
- US 2006063036 A1
- WO 2015002282 A1